# EUROPEAN PATENT APPLICATION

(11) **EP 4 422 167 A1**
(43) Date of publication of application: **28.08.2024**
(21) Application number: 22883367.9
(22) Date of filing: 06.10.2022
(51) Int. Cl.: H04N 7/18

(54) **INFORMATION PROCESSING DEVICE, INFORMATION PROCESSING METHOD, AND PROGRAM**

(30) Priority: 18.10.2021 JP 2021170464
(71) Applicant: Sony Group Corporation, Tokyo 108-0075 (JP)
(72) Inventor: HIEIDA Yusuke, Tokyo 108-0075 (JP); ISHIHARA Yu, Tokyo 108-0075 (JP); UEHARA Akira, Tokyo 108-0075 (JP); NISHIMURA Yu, Tokyo 141-0022 (JP)
(74) Representative: MFG Patentanwälte Meyer-Wildhagen Meggle-Freund Gerhard PartG mbB
(86) International application number: PCT/JP2022/037378
(87) International publication number: WO 2023/068062

(57) **Abstract**

The present technology relates to an information processing device, an information processing method, and a program capable of reducing a load in a case where an operator monitors the surroundings of a plurality of systems.

The information processing device includes: a recognition unit that extracts a caution-needed region, which is a region requiring caution around each of a plurality of systems, on the basis of a plurality of captured images captured at different positions by the plurality of systems; and an image processing unit that generates a first bird's-eye view image on the basis of the plurality of captured images including a plurality of the caution-needed regions. The present technology can be applied to, for example, a server that mediates monitoring of a system and intervention in the system by an operator.

## Description

### TECHNICAL FIELD

The present technology relates to an information processing device, an information processing method, and a program, and particularly relates to an information processing device, an information processing method, and a program suitable for use in a case where one operator monitors the surroundings of a plurality of systems.

### BACKGROUND ART

Conventionally, a technology has been proposed in which an image captured by a system worn by a user at the site is shared with an operator not at the site in real time so that the user and the operator can communicate with each other. Using this technology, for example, images captured by systems worn by users present at different positions are shared in real time with an operator who is not at the site, whereby the one operator can monitor the surroundings of a plurality of systems (users) (See, for example, Patent Document 1).

### CITATION LIST

### PATENT DOCUMENT

Patent Document 1: Japanese Patent No. 6822413

### SUMMARY OF THE INVENTION

### PROBLEMS TO BE SOLVED BY THE INVENTION

However, in a case where one operator monitors the surroundings of a plurality of systems, the visual load of the operator increases. Therefore, there is a possibility that the operator overlooks a dangerous situation around the systems.

The present technology has been made in view of such a situation, and an object thereof is to reduce a load in a case where an operator monitors the surroundings of a plurality of systems.

### SOLUTIONS TO PROBLEMS

An information processing device according to one aspect of the present technology includes: a recognition unit that extracts a caution-needed region, which is a region requiring caution around each of a plurality of systems, on the basis of a plurality of captured images captured at different positions by the plurality of systems; and an image processing unit that generates a first bird's-eye view image on the basis of the plurality of captured images including a plurality of the caution-needed regions.

An information processing method according to one aspect of the present technology includes: by an information processing device, extracting a caution-needed region, which is a region requiring caution around each of a plurality of systems, on the basis of a plurality of captured images captured at different positions by the plurality of systems; and generating a bird's-eye view image on the basis of the plurality of captured images including a plurality of the caution-needed regions.

A program according to one aspect of the present technology causes a computer to execute processing of: extracting a caution-needed region, which is a region requiring caution around each of a plurality of systems, on the basis of a plurality of captured images captured at different positions by the plurality of systems; and generating a bird's-eye view image on the basis of the plurality of captured images including a plurality of the caution-needed regions.

According to one aspect of the present technology, a caution-needed region, which is a region requiring caution around each of a plurality of systems is extracted on the basis of a plurality of captured images captured at different positions by the plurality of systems, and a bird's-eye view image is generated on the basis of the plurality of captured images including a plurality of the caution-needed regions.

### BRIEF DESCRIPTION OF DRAWINGS

Fig. 1 is a block diagram illustrating a first embodiment of an information processing system to which the present technology is applied.
Fig. 2 is a block diagram illustrating a configuration example of a user support system.
Fig. 3 is a schematic view illustrating a specific example of the user support system.
Fig. 4 is a block diagram illustrating a configuration example of a vehicle.
Fig. 5 is a block diagram illustrating a configuration example of an operation terminal.
Fig. 6 is a schematic view illustrating a specific example of the operation terminal.
Fig. 7 is a block diagram illustrating a configuration example of a management server.
Fig. 8 is a block diagram for explaining an example of processing of the information processing system.
Fig. 9 is a flowchart for explaining a first embodiment of monitoring support processing.
Fig. 10 is a diagram for explaining a method of generating a monitoring image.
Fig. 11 is a diagram for explaining an intervention method by an operator.
Fig. 12 is a flowchart for explaining a second embodiment of the monitoring support processing.
Fig. 13 is a diagram illustrating examples of a global monitoring image and a local monitoring image.
Fig. 14 is a diagram illustrating an example of a route on which vehicles go around.
Fig. 15 is a diagram illustrating an example of an accident occurrence point.
Fig. 16 is a flowchart for explaining accident handling processing.
Fig. 17 is a view illustrating an example of a monitoring image.
Fig. 18 is a diagram illustrating an example of an accident section.
Fig. 19 is a block diagram illustrating a second embodiment of the information processing system to which the present technology is applied.
Fig. 20 is a flowchart for explaining training data generation processing.
Fig. 21 is a diagram illustrating an example of unlabeled data.
Fig. 22 is a view for explaining a method of providing a label.
Fig. 23 is a diagram illustrating an example of training data.
Fig. 24 is a diagram illustrating data configuration examples of training data and a token.
Fig. 25 is a diagram illustrating a configuration example of a computer.

### MODE FOR CARRYING OUT THE INVENTION

Hereinafter, modes for carrying out the present technology will be described. The description will be given in the following order.
1. First Embodiment
2. Second Embodiment
3. Modifications
4. Others

### <<1. First Embodiment>>

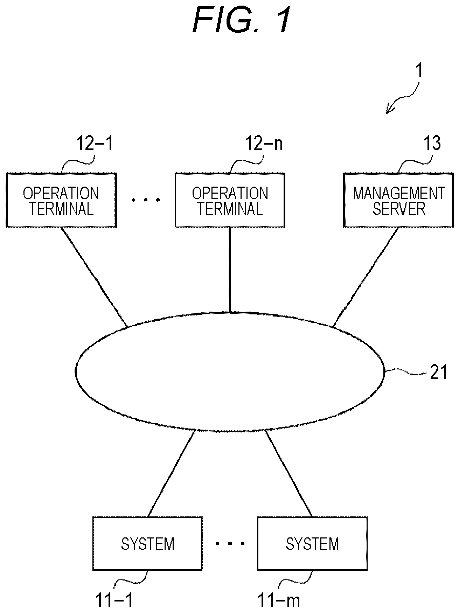

First, a first embodiment of the present technology will be described with reference to Figs. 1 to 18.

### <Configuration Example of Information Processing System 1>

Fig. 1 illustrates a configuration example of an information processing system 1 that is a first embodiment of an information processing system 1 to which the present technology is applied.

The information processing system 1 includes systems 11-1 to 11-m, operation terminals 12-1 to 12-n, and a management server 13. The systems 11-1 to 11-m, the operation terminals 12-1 to 12-n, and the management server 13 are mutually connected via a network 21.

Note that, hereinafter, in a case where it is not necessary to individually distinguish the systems 11-1 to 11-m, they are simply referred to as the systems 11. Hereinafter, in a case where it is not necessary to individually distinguish the operation terminals 12-1 to 12-n, they are simply referred to as the operation terminals 12.

The system 11 includes, for example, a user support system that supports a user, an autonomous mobile body that autonomously moves, or the like.

The user support system includes, for example, a security system, an operation support system, an action support system, or the like.

The security system is, for example, a system that is worn or carried by a user, monitors the surroundings of the security system (user), and protects the user from danger.

The operation support system is, for example, a system that is provided in a device used by a user or worn or carried by the user to support the user's operation on the device. Examples of the device to be the operation support target include a mobile body such as a vehicle that moves by user's operation, a machine tool that operates by user's operation, and the like.

The action support system is, for example, a system that is worn by a user and supports the user's action. Examples of the action support system include a powered exoskeleton worn on arms, hands, legs, and the like of the user, a prosthesis, and the like.

Examples of the autonomous mobile body include an autonomously movable vehicle, a drone, a robot, and the like. Furthermore, the autonomous mobile body may be either a mobile body which the user boards or a mobile body which the user does not board.

The operation terminal 12 is an information processing device used by an operator. The operator monitors the surroundings of each system 11 by using the operation terminal 12 and intervenes in the system 11 as necessary.

As the intervention executed by the operator, for example, at least one of field of view intervention, auditory intervention, physical intervention, operational intervention, or the like is used.

The field of view intervention is, for example, processing of intervening in the field of view of the user by using the system 11 to present optical information (hereinafter, referred to as visual information) in the field of view of the user who uses the system 11, and supporting the user, or the like. Examples of the visual information to be presented include an image, a display message, and lighting or blinking of light.

The auditory intervention is, for example, processing of intervening in the auditory sense of the user by using the system 11 to output aural information (hereinafter, referred to as auditory information) to the user who uses the system 11, and supporting the user, or the like. Examples of the auditory information to be output include an audio message, a warning sound, and a sound effect.

The physical intervention is, for example, processing of intervening in the body of the user by using the system 11 so as to cause the user who uses the system 11 to move the body or so as to give a stimulus to the body, and supporting the user, or the like.

The operation intervention is, for example, processing of intervening in the operation of the system 11 by remotely operating the system 11 and supporting the system 11 or the user who operates the system 11, or the like.

Note that the operator can use a combination of a plurality of types of interventions by using the operation terminal 12. For example, using the operation terminal 12, the operator can use a combination of two or more of the field of view intervention, the auditory intervention, the physical intervention, and the operation intervention. By combining a plurality of types of interventions, for example, more immersive interactions are achieved.

The management server 13 mediates between the system 11 and the operation terminal 12, and supports the operator, the user, and the system 11. Furthermore, in lieu of the operator, the management server 13 intervenes in the system 11 as necessary. Moreover, the management server 13 provides map information to each system 11 and each operation terminal 12.

### <Configuration Example of User Support System 51>

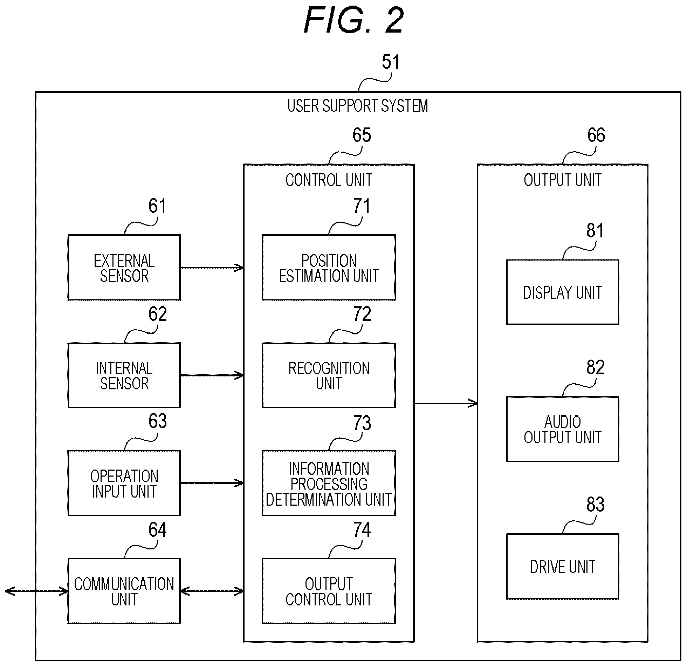

Fig. 2 illustrates a configuration example of a user support system 51, which is an example of the system 11.

The user support system 51 includes an external sensor 61, an internal sensor 62, an operation input unit 63, a communication unit 64, a control unit 65, and an output unit 66.

The external sensor 61 includes a sensor that senses a situation around the user support system 51 (user). For example, the external sensor 61 includes one or more of a camera, light detection and ranging, laser imaging detection and ranging (LiDAR), a time of flight (ToF) sensor, a millimeter wave radar, an ultrasonic sensor, a distance sensor, and the like. The external sensor 61 supplies sensor data (hereinafter, referred to as external sensor data) obtained by each sensor to the control unit 65.

The external sensor data includes a captured image obtained by imaging the surroundings of the user. The captured image may be either a moving image or a still image. Note that, for example, an image obtained by capturing an image of 360 degrees around the user support system 51 with a fisheye camera or the like can be used as the captured image.

The internal sensor 62 includes a sensor that senses the states of the user support system 51 and the user. For example, the internal sensor 62 includes a global navigation satellite system (GNSS) receiver, an inertial measurement unit (IMU), and the like. The internal sensor 62 supplies sensor data (hereinafter, referred to as internal sensor data) obtained by each sensor to the control unit 65.

The operation input unit 63 includes various operation devices and is used for an operation by the user. The operation input unit 63 supplies an operation signal corresponding to the user's operation to the control unit 65.

The communication unit 64 includes various communication devices, and can communicate with other devices such as another system 11, the operation terminal 12, and the management server 13 via the network 21. The communication unit 64 supplies data received from another device to the control unit 65, and acquires data to be transmitted to another device from the control unit 65.

The control unit 65 includes, for example, a processor such as a CPU. The control unit 65 executes control of the user support system 51 and various processes. The control unit 65 includes a position estimation unit 71, a recognition unit 72, an information processing determination unit 73, and an output control unit 74.

The position estimation unit 71 estimates the position and posture of the user support system 51 (user) on the basis of the external sensor data and the internal sensor data.

The recognition unit 72 recognizes the situation around the user support system 51 and the states of the user support system 51 and the user on the basis of the external sensor data and the internal sensor data. For example, the recognition unit 72 executes recognition processing of an object around the user support system 51, and recognizes the type, position, size, shape, motion, and the like of the object.

The information processing determination unit 73 executes various types of information processing and makes a judgment on and controls the performance and processing of the user support system 51 on the basis of the operation signal from the operation input unit 63, the estimation result of the position estimation unit 71, and the recognition result of the recognition unit 72. Furthermore, for example, in accordance with the intervention from the operator or the management server 13, the information processing determination unit 73 executes various types of information processing and makes a judgement on and controls the performance and processing of the user support system 51, whereby the operation intervention is implemented.

The output control unit 74 controls a display unit 81, an audio output unit 82, and a drive unit 83 included in the output unit 66. Furthermore, the output control unit 74 generates monitoring information and transmits the monitoring information to the operation terminal 12 and the management server 13 via the communication unit 64 and the network 21.

The monitoring information includes, for example, a captured image obtained by imaging the surroundings of the user support system 51, a recognition result of the situation around the user support system 51, and recognition results of the states of the user support system 51 and the user.

The output unit 66 includes the display unit 81, the audio output unit 82, and the drive unit 83.

The display unit 81 includes various display devices such as a display and a head mounted display, and outputs visual information. Furthermore, for example, the display unit 81 outputs visual information in accordance with intervention from the operator or the management server 13, whereby the field of view intervention is implemented.

The audio output unit 82 includes various audio output devices such as headphones, earphones, and a speaker, and outputs auditory information. Furthermore, for example, the audio output unit 82 outputs auditory information in accordance with intervention from the operator or the management server 13, whereby the auditory intervention is implemented.

The drive unit 83 includes, for example, an actuator or the like that gives a slight electric stimulus to the body of the user to an extent that there is no harm to the tactile sense or the health. For example, the drive unit 83 includes a powered exoskeleton worn on the arms, hands, legs, and the like of the user, or a device that assists or restrains a motion of a body by driving the exoskeleton. Furthermore, for example, in accordance with the intervention from the operator or the management server 13, the drive unit 83 moves the user's body or gives a stimulus to the user's body, whereby the physical intervention is implemented.

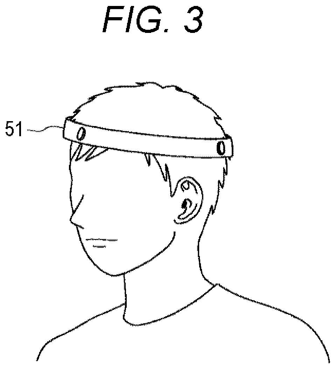

Fig. 3 illustrates an attachment example of the user support system 51. In this example, an example is illustrated in which the user support system 51 is a ring-shaped wearable device worn on the head of the user.

Note that the user support system 51 may include another type of wearable device. Furthermore, the user support system 51 may be configured by a combination of two or more devices. For example, the user support system 51 may be configured by a combination of a wearable device and a smartphone.

Note that, hereinafter, in a case where each unit of the user support system 51 communicates with another device via the communication unit 64 and the network 21, description of the communication unit 64 and the network 21 will be omitted. For example, in a case where the control unit 65 transmits and receives data to and from the management server 13 via the communication unit 64 and the network 21, it is described that the control unit 65 transmits and receives data to and from the management server 13.

### <Configuration Example of Vehicle 101>

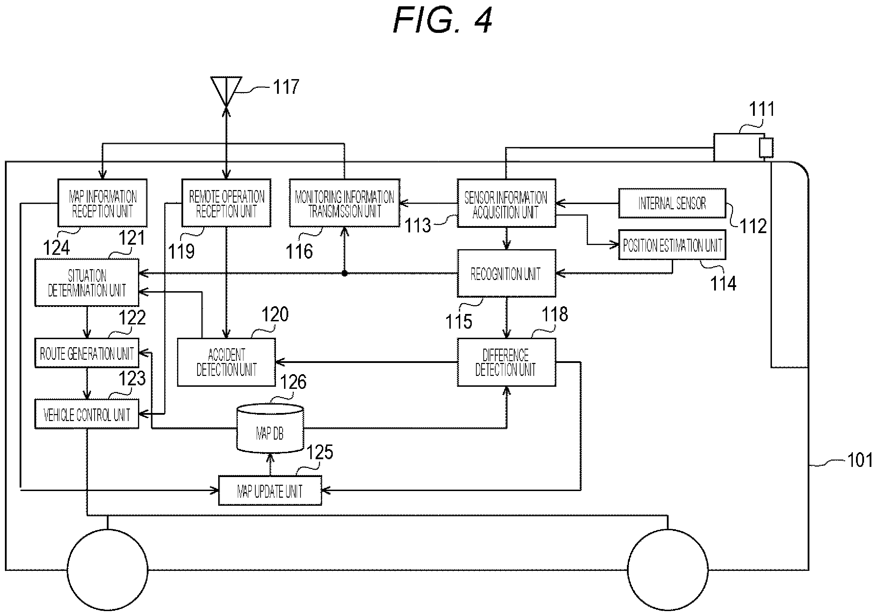

Fig. 4 illustrates a configuration example of a vehicle 101, which is an example of the system 11. The vehicle 101 is a vehicle capable of autonomous movement by automated driving.

The vehicle 101 includes an external sensor 111, an internal sensor 112, a sensor information acquisition unit 113, a position estimation unit 114, a recognition unit 115, a monitoring information transmission unit 116, an antenna 117, a difference detection unit 118, a remote operation reception unit 119, an accident detection unit 120, a situation determination unit 121, a route generation unit 122, a vehicle control unit 123, a map information reception unit 124, a map update unit 125, and a map database (DB) 126.

The external sensor 111 includes various sensors used for recognizing the situation around the vehicle 101. For example, the external sensor 111 includes one or more of a camera, a radar, LiDAR, an ultrasonic sensor, a distance sensor, and the like. The external sensor 111 supplies sensor data (hereinafter, referred to as external sensor data) output from each sensor to the sensor information acquisition unit 113. The external sensor data includes a captured image obtained by imaging the surroundings of the vehicle 101.

The internal sensor 112 includes various sensors used for recognizing the state around the vehicle 101. For example, the internal sensor 112 includes a GNSS receiver, an IMU, a speed sensor, an accelerator sensor, a brake sensor, a wheel speed sensor, and the like. The internal sensor 62 supplies sensor data (hereinafter, referred to as internal sensor data) obtained by each sensor to the sensor information acquisition unit 113.

The sensor information acquisition unit 113 supplies the external sensor data and the internal sensor data to the position estimation unit 114, the recognition unit 115, and the monitoring information transmission unit 116.

The position estimation unit 114 estimates the position and posture of the vehicle 101 on the basis of the external sensor data and the internal sensor data. The position estimation unit 114 supplies information indicating the estimation results of the position and posture of the vehicle 101 to the recognition unit 115.

The recognition unit 115 recognizes the situation around the vehicle 101 and the state of the vehicle 101 on the basis of the external sensor data, the internal sensor data, and the estimation results of the position and posture of the vehicle 101. For example, the recognition unit 115 executes recognition processing of an object around the vehicle 101, and recognizes the type, position, size, shape, motion, and the like of the object. The recognition unit 115 supplies information indicating the recognition results to the monitoring information transmission unit 116, the difference detection unit 118, and the situation determination unit 121.

The monitoring information transmission unit 116 transmits the monitoring information to the operation terminal 12 and the management server 13 via the antenna 117 and the network 21.

The monitoring information includes, for example, a captured image obtained by imaging the surroundings of the vehicle 101, estimation results of the position and posture of the vehicle 101, and recognition results of the situation around the vehicle 101 and the state of the vehicle 101. The captured image may be either a moving image or a still image.

The difference detection unit 118 executes processing of detecting a difference between the situation around the vehicle 101 recognized by the recognition unit 115 and map information accumulated in the map DB 126. The difference detection unit 118 supplies difference information indicating the detection result of the difference between the situation around the vehicle 101 and the map information to the accident detection unit 120 and the map update unit 125.

The remote operation reception unit 119 receives a remote operation signal for remotely operating the vehicle 101 from the operation terminal 12 or the management server 13 via the network 21 and the antenna 117. The remote operation reception unit 119 supplies the received remote operation signal to the accident detection unit 120 and the vehicle control unit 123.

The accident detection unit 120 executes processing of detecting an accident around the vehicle 101 on the basis of the difference information and the remote operation signal. Here, the accident is, for example, an external event that hinders passage of the vehicle 101. Specifically, for example, a disaster, a crash, construction, an obstacle, damage to a road, or the like is assumed as an accident. The accident detection unit 120 supplies accident information indicating a detection result of the accident to the situation determination unit 121.

The situation determination unit 121 controls the traveling method on the basis of the monitoring information and the accident information. Here, the traveling method is, for example, normal traveling, low-speed traveling, manual traveling, traveling according to operator's operation intervention, and the like. The normal traveling and the low-speed traveling are methods in which the vehicle 101 autonomously travels by automated driving. The manual traveling is a method of traveling by the driver's operation. The situation determination unit 121 notifies the route generation unit 122 of the set traveling method of the vehicle 101, and supplies the monitoring information and the accident information to the route generation unit 122.

In a case where the vehicle 101 autonomously travels, the route generation unit 122 generates route information indicating a route on which the vehicle 101 travels on the basis of the monitoring information, the accident information, and the map information accumulated in the map DB 126. The route generation unit 122 supplies the route information to the vehicle control unit 123.

The vehicle control unit 123 controls traveling of the vehicle 101 in accordance with the route information, the remote operation signal, or an operation by the driver.

The map information reception unit 124 receives the map information from the management server 13 via the network 21 and the antenna 117. The map information reception unit 124 supplies the received map information to the map update unit 125.

The map update unit 125 updates the map information accumulated in the map DB 126 to map information received from the outside. Note that the map update unit 125 corrects the map information accumulated in the map DB 126 as necessary on the basis of the difference information.

Note that, hereinafter, in a case where each unit of the vehicle 101 communicates with another device via the antenna 117 and the network 21, description of the antenna 117 and the network 21 will be omitted. For example, in a case where the monitoring information transmission unit 116 transmits the monitoring information to the management server 13 via the antenna 117 and the network 21, it is described that the monitoring information transmission unit 116 transmits monitoring information to the management server 13.

### <Configuration Example of Operation Terminal 12>

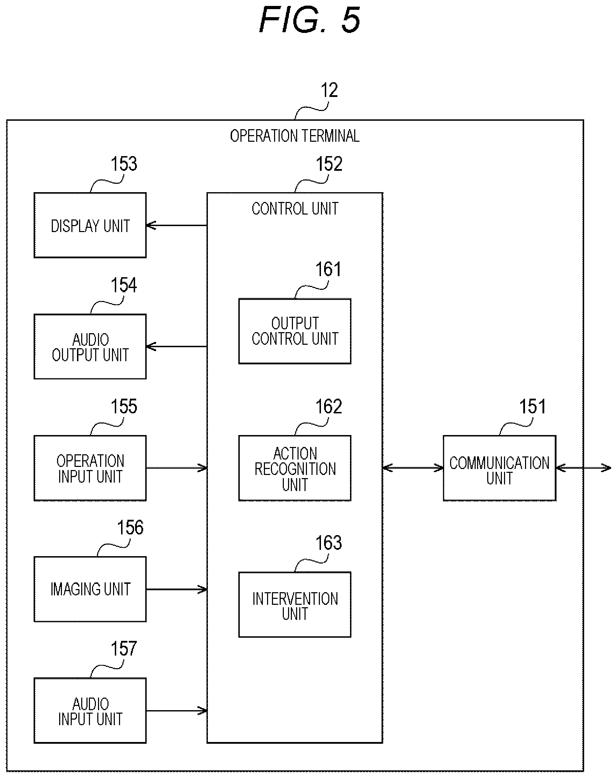

Fig. 5 illustrates a configuration example of the operation terminal 12.

The operation terminal 12 includes a communication unit 151, a control unit 152, a display unit 153, an audio output unit 154, an operation input unit 155, an imaging unit 156, and an audio input unit 157.

The communication unit 151 includes various communication devices, and can communicate with other devices such as the system 11, another operation terminal 12, and the management server 13 via the network 21. The communication unit 151 supplies data received from another device to the control unit 152, and acquires data to be transmitted to another device from the control unit 152.

The control unit 152 includes, for example, a processor such as a CPU. The control unit 152 controls the operation terminal 12 and executes various processes. The control unit 152 includes an output control unit 161, an action recognition unit 162, and an intervention unit 163.

The output control unit 161 controls output of visual information by the display unit 153 and output of auditory information by the audio output unit 154.

The action recognition unit 162 recognizes the action (for example, a gesture) of the operator on the basis of the captured image of the operator captured by the imaging unit 156.

The intervention unit 163 generates intervention information for performing intervention in the system 11 on the basis of information input by the operator via the operation input unit 155 or the audio input unit 157, or a gesture of the operator recognized by the action recognition unit 162. The intervention information includes, for example, visual information used for visual intervention, an auditory signal used for auditory intervention, or a remote operation signal used for physical intervention or operation intervention to remotely operate the system 11. The intervention unit 163 transmits intervention information to the system 11 or the management server 13 via the communication unit 151 and the network 21.

The display unit 153 includes various display devices such as a display and a head mounted display, and outputs visual information.

The audio output unit 154 includes various audio output devices such as headphones, earphones, and a speaker, and outputs auditory information.

The operation input unit 155 includes various operation devices and is used for an operation by the operator. The operation input unit 155 supplies an operation signal corresponding to an operation by the operator to the control unit 152.

The imaging unit 156 includes, for example, a camera. For example, the imaging unit 156 images the operator and supplies the obtained captured image to the control unit 152.

The audio input unit 157 includes, for example, a microphone. The audio input unit 157 collects the voice or the like of the operator and supplies the obtained audio data to the control unit 152.

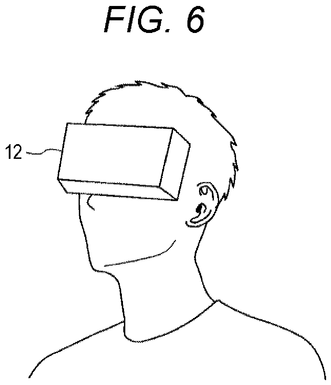

Fig. 6 illustrates a mounting example of the operation terminal 12. In this example, an example in which the operation terminal 12 is a head mounted display mounted on the head of the operator is illustrated.

Note that the operation terminal 12 may include another type of wearable device. Furthermore, the operation terminal 12 may include an information processing device other than a wearable device, such as a personal computer (PC), a smartphone, or a tablet terminal. Moreover, the operation terminal 12 may be configured by a combination of two or more devices. For example, the operation terminal 12 may be configured by a combination of a wearable device and a smartphone. For example, the operation terminal 12 may be configured by a combination of a plurality of displays and a computer.

Note that, hereinafter, in a case where each unit of the operation terminal 12 communicates with another device via the communication unit 151 and the network 21, description of the communication unit 151 and the network 21 will be omitted. For example, in a case where the control unit 152 transmits and receives data to and from the management server 13 via the communication unit 151 and the network 21, it is described that the control unit 152 transmits and receives data to and from the management server 13.

### <Configuration Example of Management Server 13>

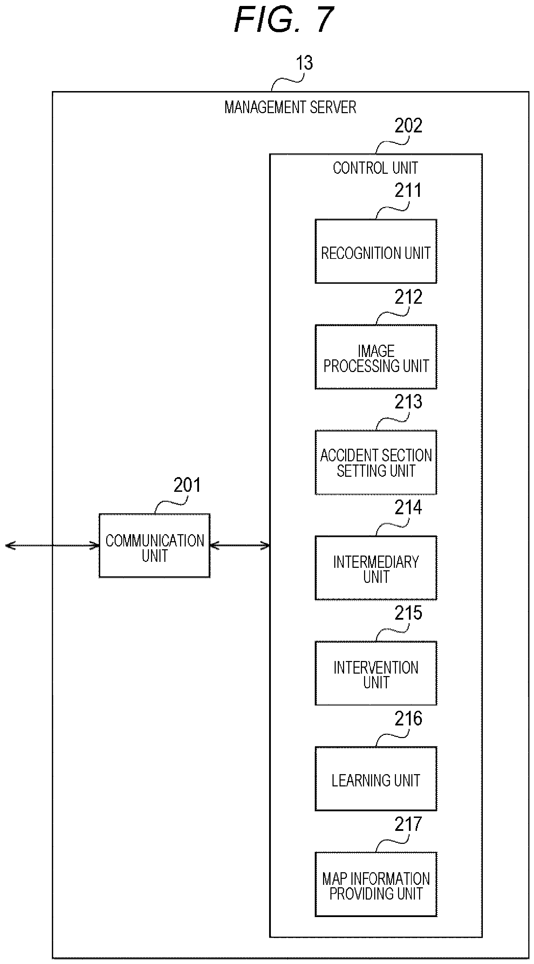

Fig. 7 illustrates a configuration example of the management server 13.

The management server 13 includes a communication unit 201 and a control unit 202.

The communication unit 201 includes various communication devices. The communication unit 201 can communicate with other devices such as the system 11 and the operation terminal 12 via the network 21. The communication unit 201 supplies data received from another device to the control unit 202, and acquires data to be transmitted to another device from the control unit 202.

The control unit 202 includes a processor such as a CPU and executes control of the management server 13 and various processes. The control unit 202 includes a recognition unit 211, an image processing unit 212, an accident section setting unit 213, an intermediary unit 214, an intervention unit 215, a learning unit 216, and a map information providing unit 217.

The recognition unit 211 recognizes a situation around the system 11 on the basis of the monitoring information received from the system 11.

The image processing unit 212 executes various types of image processing on the captured image acquired from the system 11. For example, the image processing unit 212 generates a monitoring image used by the operator to monitor the environment around the system 11 on the basis of the captured image acquired from each system 11.

The accident section setting unit 213 sets an accident section on the basis of intervention information transmitted from the operation terminal 12 at the time of operation intervention in the system 11 by the operator and monitoring information transmitted from the system 11 at the time of operation intervention. The accident section includes, for example, an accident occurrence point, and is a section in which operation intervention is performed by the operator.

The intermediary unit 214 mediates monitoring around the system 11 by the operation terminal 12 (operator) and intervention processing on the system 11 by the operation terminal 12 (operator). For example, the intermediary unit 214 transmits the monitoring image generated by the image processing unit 212 to the operation terminal 12 via the communication unit 201 and the network 21. For example, the intermediary unit 214 transmits the intervention information received from the operation terminal 12 to the system 11 to be an intervention target via the communication unit 201 and the network 21. At this time, the intermediary unit 214 processes the intervention information as necessary.

The intervention unit 215 executes intervention processing on the system 11 instead of or together with the operator. For example, the intervention unit 215 generates intervention information for performing intervention in the system 11, and transmits the intervention information to the target system 11.

The learning unit 216 learns the operation of the system 11 by the operator on the basis of the monitoring information acquired from the system 11 and the remote operation signal included in the intervention information acquired from the operation terminal 12. For example, the learning unit 216 learns an operation by an operator of the vehicle 101 that is a type of the system 11.

The map information providing unit 217 provides map information to each system 11 and each operation terminal 12.

### <Processing of Information Processing System 1>

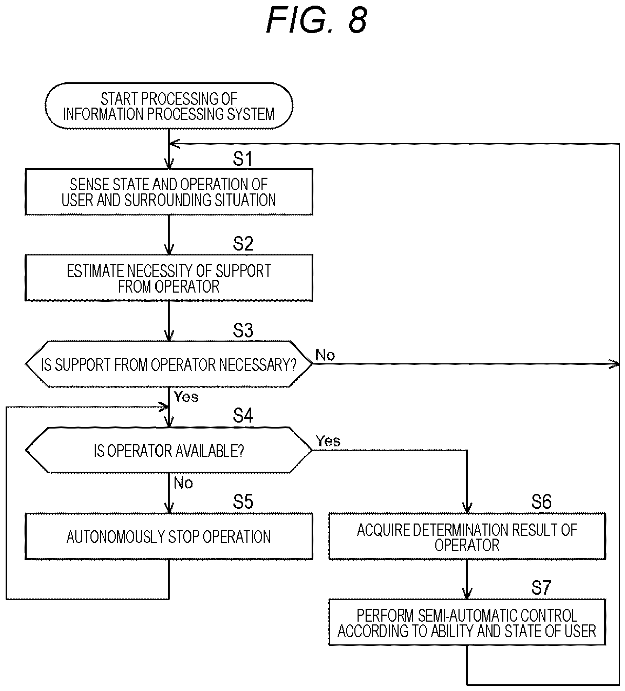

Next, processing in the information processing system 1 will be described with reference to Figs. 8 to 18.

### <Operation Support Processing>

First, with reference to a flowchart of Fig. 8, operation support processing executed by the information processing system 1 will be described.

Hereinafter, an example of a case where the user operates the user support system 51 and the operator performs operation intervention as necessary will be described.

In step S1, the user support system 51 senses the user's state and operation and the surrounding situation. Specifically, the external sensor 61 senses the situation around the user support system 51 (user) and supplies external sensor data to the control unit 65. The internal sensor 62 senses the state of the user support system 51 and the user and supplies internal sensor data to the control unit 65. The operation input unit 63 supplies an operation signal corresponding to the user's operation to the control unit 65 in accordance with the user's operation.

The position estimation unit 71 estimates the position and posture of the user support system 51 (user) on the basis of the external sensor data and the internal sensor data. The recognition unit 72 recognizes the situation around the user support system 51 and the states of the user support system 51 and the user on the basis of the external sensor data and the internal sensor data.

The output control unit 74 generates monitoring information and transmits the monitoring information to the management server 13. The monitoring information includes, for example, a captured image obtained by imaging the surroundings of the user support system 51, a recognition result of the situation around the user support system 51, and recognition results of the states of the user support system 51 and the user.

In response to this, the control unit 202 of the management server 13 receives the monitoring information from the system 11. The image processing unit 212 generates a monitoring image on the basis of the captured image included in the monitoring information. The intermediary unit 214 transmits the monitoring image to the operation terminal 12 of the operator.

In response to this, the control unit 152 of the operation terminal 12 receives the monitoring image from the management server 13. The display unit 153 displays the monitoring image under the control of the output control unit 161. The operator monitors the situation around the user while viewing the monitoring image displayed on the display unit 153.

In step S2, the user support system 51 estimates the necessity of support from the operator. For example, the recognition unit 72 estimates a risk level indicating a probability that the user will encounter danger on the basis of the result of the processing in step S1. The information processing determination unit 73 estimates the necessity of support from the operator on the basis of the estimated risk level. For example, the higher the risk level, the higher the need for support, and the lower the risk level, the lower the need for support.

In step S3, the information processing determination unit 73 determines whether or not support from the operator is necessary. For example, in a case where the necessity of support estimated in the processing of step S2 is less than a predetermined threshold, the information processing determination unit 73 determines that support from the operator is not necessary, and the processing returns to step Sl.

Thereafter, the processing in steps S1 to S3 is repeatedly executed until it is determined in step S3 that support from the operator is necessary.

In contrast, in a case where the necessity of support estimated in the processing in step S2 is equal to or more than the predetermined threshold, the information processing determination unit 73 determines in step S3 that support from the operator is necessary, and the processing proceeds to step S4.

In step S4, the management server 13 determines whether or not the operator is available.

For example, the information processing determination unit 73 of the user support system 51 requests the management server 13 to provide support from the operator.

In response to this, the intermediary unit 214 of the management server 13 receives a request for support from the user support system 51, and inquires the operation terminal 12 of the operator whether or not the support from the user is possible.

In response to this, the control unit 152 of the operation terminal 12 receives an inquiry about availability of support for the user from the management server 13. Under the control of the output control unit 161, the display unit 153 displays a message inquiring whether or not support for the user is possible.

In response to this, the operator determines whether or not support for the user is possible, and inputs the determination result to the operation terminal 12 via the operation input unit 155. The intervention unit 163 of the operation terminal 12 notifies the management server 13 of the determination result as to whether or not the operator can support the user.

In response to this, the intermediary unit 214 of the management server 13 receives a notification of the determination result as to whether or not the operator can support the user. In a case where the intermediary unit 214 determines that the operator is not available on the basis of the determination result by the operator, the processing proceeds to step S5.

In step S5, the user support system 51 autonomously stops the operation. Specifically, the intermediary unit 214 of the management server 13 notifies the user support system 51 that the operator is not available.

In response to this, the control unit 65 of the user support system 51 receives a notification that the operator is not available. The user support system 51 autonomously stops the operation under the control of the information processing determination unit 73. As a result, the safety of the user is locally ensured.

Thereafter, the processing returns to step S4, and the processing in steps S4 and S5 is repeatedly executed until it is determined in step S4 that the operator is available.

In contrast, in a case where the intermediary unit 214 of the management server 13 determines in step S4 that the operator is available on the basis of the determination result by the operator, the processing proceeds to step S6.

In step S6, the management server 13 acquires the determination result of the operator. For example, the operator determines an intervention method for supporting the user while viewing the monitoring image, and inputs information regarding the intervention method by using the operation input unit 155 or the like. The intervention unit 163 generates intervention information for performing intervention in the user support system 51 on the basis of the information input by the operator. The intervention unit 163 transmits the intervention information to the management server 13.

In response to this, the control unit 202 of the management server 13 receives the intervention information from the operation terminal 12.

In step S7, the user support system 51 performs semi-automatic control according to the ability and state of the user. Specifically, the intervention unit 215 of the management server 13 transmits the intervention information received from the operation terminal 12 to the user support system 51.

In response to this, the control unit 65 of the user support system 51 receives the intervention information from the management server 13. For example, the information processing determination unit 73 determines a ratio of automatic control by intervention of the operator according to the ability and state of the user on the basis of the intervention information. The output control unit 74 controls the output unit 66 on the basis of the determined ratio of the automatic control. As a result, operation intervention by the operator is executed.

Thereafter, the processing returns to step S1, and the processing in and after step S1 is executed.

As described above, the user can be supported by the intervention of the operator.

### <First Embodiment of Monitoring Support Processing>

For example, the greater the number of systems 11 monitored by the operator, the greater the load on the operator. Therefore, for example, it is more likely that it is determined in step S4 of Fig. 8 that the operator is not available, and the user support system 51 stops the operation and the operator cannot support the user.

In this regard, as described below, the management server 13 supports monitoring by the operator and reduces the load on the operator.

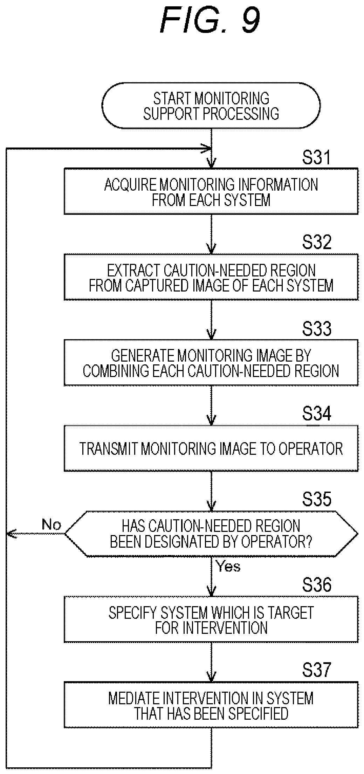

Here, a first embodiment of monitoring support processing executed by the management server 13 will be described with reference to the flowchart of Fig. 9.

This processing is started, for example, when the power of the management server 13 is turned on and is ended when the power of the management server 13 is turned off.

Hereinafter, a case of supporting one operator who monitors the situation around the plurality of systems 11 (users) will be described as an example.

In step S31, the management server 13 acquires monitoring information from each system 11. That is, the control unit 202 of the management server 13 receives monitoring information transmitted from each system 11 monitored by the operator.

The monitoring information includes, for example, a captured image obtained by imaging the surroundings of the system 11, a recognition result of the situation around the system 11, and a recognition result of the state of the system 11. Furthermore, the monitoring information includes a recognition result of the state of the user in a case where the system 11 is used by the user (for example, in a case where the system 11 is not a robot or the like that the user does not board).

In step S32, the recognition unit 211 extracts a caution-needed region from the captured image of each system 11. For example, on the basis of the monitoring information received from each system 11, the recognition unit 211 extracts the caution-needed region from the captured image included in the monitoring information.

Here, the caution-needed region is a region where it is estimated that the user or the system 11 needs to pay attention. For example, the caution-needed region includes a region including a dangerous object and a region including an object that the user or the system 11 needs to check.

Dangerous objects are, for example, objects that may endanger the user or the system 11, and conversely, objects that the user or the system 11 may endanger. Examples of the dangerous object include objects that the user or the system 11 may collide with or contact, such as surrounding vehicles, pedestrians, obstacles, and the like. Examples of the dangerous object include an object that may cause the user or the system 11 to fall over or down, such as a puddle or a hole in a construction site.

Examples of the object that the user or the system 11 needs to check include a traffic light, a road sign, an intersection, a railroad crossing, and the like.

Note that the caution-needed region is not necessarily extracted from all the captured images, and there may be captured images from which no caution-needed region is extracted.

In step S33, the image processing unit 212 generates a monitoring image by combining each caution-needed region. Specifically, the image processing unit 212 extracts an image of the caution-needed region (hereinafter, referred to as a caution-needed region image) from each captured image, and combines the extracted caution-needed region images to generate a monitoring image. At this time, the image processing unit 212 arranges each caution-needed region image at a position in the monitoring image, the position corresponding to the position in the original captured image. As a result, each caution-needed region image is arranged in the monitoring image while the position viewed from the system 11 is maintained, and a bird's-eye view image in which the caution-needed regions are looked down at once is generated.

Note that, for example, instead of the image extracted from the captured image, the image processing unit 212 may generate a two-dimensional model or a three-dimensional model of the object existing in the caution-needed region, and use the two-dimensional model or the three-dimensional model as the caution-needed region image.

In step S34, the intermediary unit 214 transmits the monitoring image to the operator. That is, the intermediary unit 214 transmits the monitoring image to the operation terminal 12 being used by the operator.

In response to this, the operation terminal 12 receives the monitoring image and displays the monitoring image on the display unit 153. The operator monitors the surroundings of each system 11 while viewing the monitoring image displayed on the display unit 153.

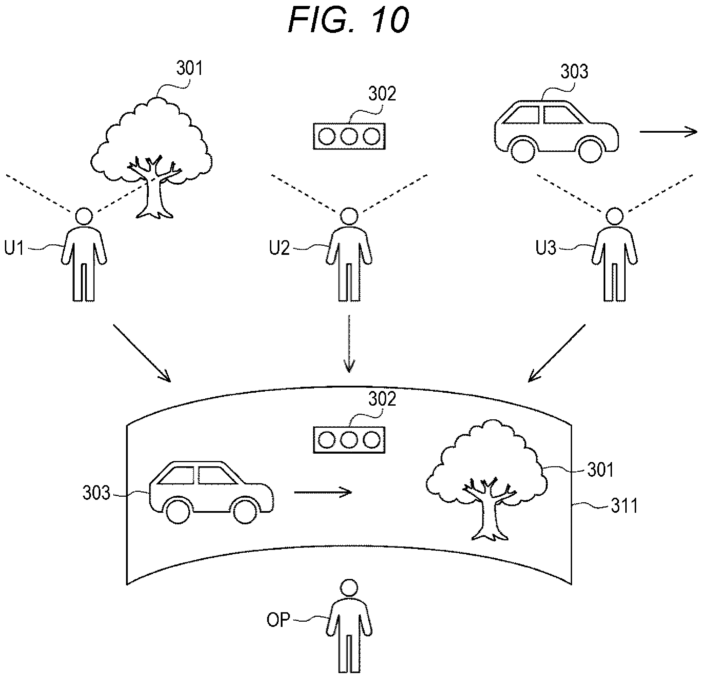

Here, an example of a method of generating a monitoring image will be described with reference to Fig. 10. Fig. 10 illustrates an example of a case where an operator OP monitors the surroundings of (the systems 11 being used by) users U1 to U3.

For example, there is a tree 301 in front of the user U1 on the right-hand side, and the system 11 of the user U1 captures a captured image including the tree 301. Then, a region including the tree 301 is extracted as a caution-needed region from the captured image of the user U1.

For example, there is a traffic light 302 at the center in front of a user U2, and the system 11 of the user U2 acquires a captured image including the traffic light 302. Then, a region including the traffic light 302 is extracted as a caution-needed region from the captured image of the user U2.

For example, there is a vehicle 303 in front of a user U3 on the left-hand side, and the system 11 of the user U3 acquires a captured image including the vehicle 303. Then, a region including the vehicle 303 is extracted as a caution-needed region from the captured image of the user U3.

Then, a monitoring image 311 including images of the tree 301, the traffic light 302, and the vehicle 303 is generated. In the monitoring image 311, the tree 301, the traffic light 302, and the vehicle 303 are arranged at positions corresponding to positions in the original captured images.

In this manner, the tree 301, the traffic light 302, and the vehicle 303 that actually exist at different locations are arranged in the one monitoring image 311. Furthermore, in the monitoring image, the tree 301, the traffic light 302, and the vehicle 303 are arranged at the positions similar to those as viewed from (the systems 11 of) the users.

As a result, the operator OP can check the caution-needed regions around (the systems 11 of) the users at a time by viewing the monitoring image. Furthermore, since a region other than the caution-needed regions is not displayed in the monitoring image, visibility of the caution-needed regions is improved, and the operator OP can easily recognize the caution-needed regions. Moreover, the operator OP can easily recognize the relative position of the caution-needed region with respect to (the system 11 of) the user. Moreover, the operator OP can easily recognize the position of the caution-needed region viewed from (the system 11 of) the user.

In step S35, the management server 13 determines whether or not the caution-needed region has been designated by the operator.

For example, in a case where there is a caution-needed region determined to require intervention in order to avoid the user or the system 11 from danger among the caution-needed regions in the monitoring image, the operator designates the caution-needed region (hereinafter, referred to as a region of interest).

Note that a method of designating the region of interest is not particularly limited. For example, the operator designates the region of interest by using the operation input unit 155, or by using a gesture (for example, finger pointing or the like) or audio.

The intervention unit 163 of the operation terminal 12 transmits information (hereinafter, referred to as region-of-interest information) indicating the region of interest designated by the operator to the management server 13.

In response to this, the control unit 202 of the management server 13 receives the region-of-interest information from the operation terminal 12. Then, the intermediary unit 214 determines that the caution-needed region has been designated by the operator, and the processing proceeds to step S36.

In step S36, the intermediary unit 214 specifies the system 11 which is a target for intervention. Specifically, the intermediary unit 214 specifies a captured image as an extraction source of the region of interest designated by the operator on the basis of the region-of-interest information. Furthermore, the intermediary unit 214 specifies the system 11 that has captured the specified captured image. As a result, the system 11 (hereinafter, referred to as an intervention target system) which is a target for intervention is specified.

In step S37, the management server 13 mediates intervention in the system 11 that has been specified.

For example, after designating the region of interest, the operator inputs information necessary for intervention in the intervention target system to the operation terminal 12. Note that the intervention method by the operator may be any of the visual intervention, the auditory intervention, the physical intervention, and the operation intervention described above. Furthermore, two or more kinds of intervention methods may be combined.

Furthermore, the method of inputting necessary information for intervention is not particularly limited. For example, the operator inputs information necessary for intervention to the operation terminal 12 by using the operation input unit 155 or by using a gesture or audio.

The intervention unit 163 of the operation terminal 12 generates intervention information on the basis of the information input by the operator, and transmits the intervention information to the management server 13.

In response to this, the intermediary unit 214 of the management server 13 receives the intervention information from the operation terminal 12. The intermediary unit 214 transmits the received intervention information to the intervention target system.

In response to this, the intervention target system receives the intervention information and executes processing according to intervention by the operator on the basis of the intervention information.

For example, in a case where the intervention target system is the user support system 51, the output unit 66 executes processing according to the visual intervention, the auditory intervention, the physical intervention, or the operation intervention on the basis of the intervention information under the control of the output control unit 74.

For example, in a case where the intervention target system is the vehicle 101, the vehicle control unit 123 executes processing according to the operation intervention by controlling the operation of the vehicle 101 on the basis of the intervention information.

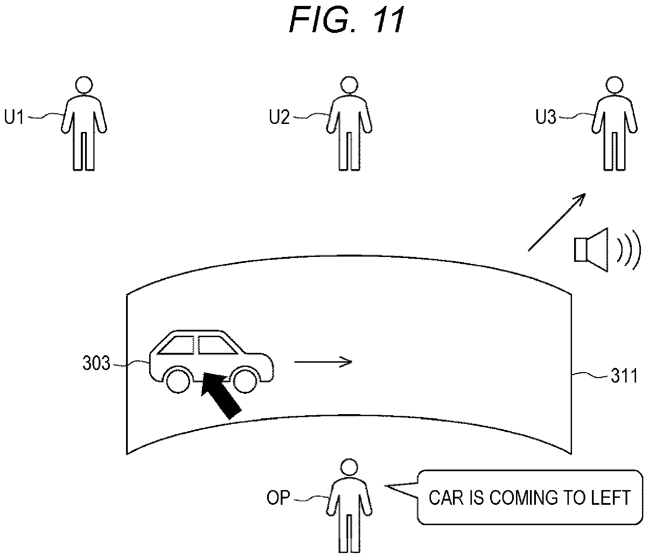

For example, as schematically illustrated in Fig. 11, in a case where the operator OP designates the vehicle 303 in the monitoring image 311 and inputs an audio message "a car is coming to the left" to the operation terminal 12, the operation terminal 12 transmits intervention information including the audio message to the management server 13.

In response to this, the intermediary unit 214 of the management server 13 receives the intervention information from the operation terminal 12, and transmits the intervention information to the system 11 of the user U3.

In response to this, the system 11 of the user U3 outputs an audio message "a car is coming to the left" on the basis of the intervention information.

In this manner, the auditory intervention in the system 11 of the user U3 by the operator is implemented.

Thereafter, the processing returns to step S31, and the processing in step S31 and subsequent steps is executed.

In contrast, in step S35, in a case where the intermediary unit 214 has not received the region-of-interest information from the operation terminal 12, the intermediary unit 214 determines that the caution-needed region is not designated by the operator, and the processing returns to step S31.

Thereafter, the processing in step S31 and the subsequent steps is performed.

As described above, the operator can efficiently monitor the surroundings of the plurality of systems 11. Furthermore, the operator can quickly sense danger around each system 11 and easily and quickly intervene in the system 11. Therefore, the operator can quickly and reliably avoid the user or the system 11 from danger, and the reliability of intervention by the operator is improved.

### <Second Embodiment of Monitoring Support Processing>

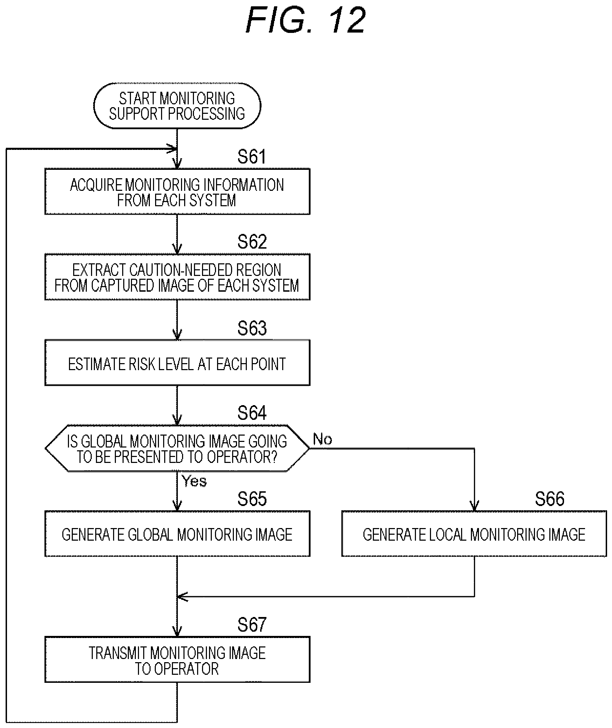

Next, with reference to the flowchart of Fig. 12, a second embodiment of the monitoring support processing executed by the management server 13 will be described.

In step S61, monitoring information is acquired from each system 11 similarly to the processing of step S31 in Fig. 9.

In step S62, a caution-needed region is extracted from the captured image of each system 11 similarly to the processing in step S32 in Fig. 9.

In step S63, the recognition unit 211 estimates the risk level at each point. For example, the recognition unit 211 estimates the risk level of each caution-needed region extracted in the processing of step S62.

Here, a method of estimating the risk level is not particularly limited. For example, the recognition unit 211 estimates the probability and the degree of danger that the user or the system 11 will be endangered in the caution-needed region, and conversely, the probability and the degree of danger that the user or the system 11 will pose a danger in the caution-needed area. Then, the recognition unit 211 estimates the risk level of the caution-needed region on the basis of the estimation result.

Furthermore, for example, the recognition unit 211 estimates the risk level at each point. For example, the recognition unit 211 combines the caution-needed regions existing within a predetermined range into one point. Then, for example, the recognition unit 211 calculates an average value of the risk levels of the caution-needed regions existing in a point as the risk level of the point.

In step S64, the intermediary unit 214 determines whether or not to present a global monitoring image to the operator. For example, in a case where the condition for presenting the global monitoring image to the operator is satisfied, the intermediary unit 214 determines to present the global monitoring image to the operator, and the processing proceeds to step S65.

The condition for presenting a global monitoring image to the operator is assumed to be, for example, a case where an instruction to present a global monitoring image is given by the operator, or a case where there is no point where the risk level is equal to or higher than a predetermined threshold.

In step S65, the image processing unit 212 generates the global monitoring image.

Thereafter, the processing proceeds to step S67.

In contrast, for example, in a case where the condition for presenting a local monitoring image to the operator is satisfied, the image processing unit 212 determines in step S64 to present the local monitoring image to the operator, and the processing proceeds to step S66.

The condition for presenting a local monitoring image to the operator is assumed to be, for example, a case where an instruction to present a local monitoring image is given by the operator, or a case where there is a point where the risk level is equal to or higher than the predetermined threshold.

Note that as a situation in which the risk level is equal to or greater than the predetermined threshold, for example, a situation in which obstacles are scattered on a road or a traffic line is lost due to a disaster, a crash, or the like is assumed. This situation is recognized, for example, by estimating the degree of unsteadiness by using pattern matching or machine learning on the basis of data of a camera or a distance sensor.

Furthermore, as a situation in which the risk level is equal to or greater than the predetermined threshold, for example, an attempt to enter a railroad crossing even though the crossing bars are lowered is assumed. This situation is recognized on the basis of a preset scenario by using image processing or machine learning on the basis of data of the camera or the distance sensor, for example.

In step S66, the image processing unit 212 generates a local monitoring image.

Thereafter, the processing proceeds to step S67.

In step S67, the monitoring image is transmitted to the operator, similarly to the processing in step S34 in Fig. 9. As a result, the global monitoring image or the local monitoring image is presented to the operator.

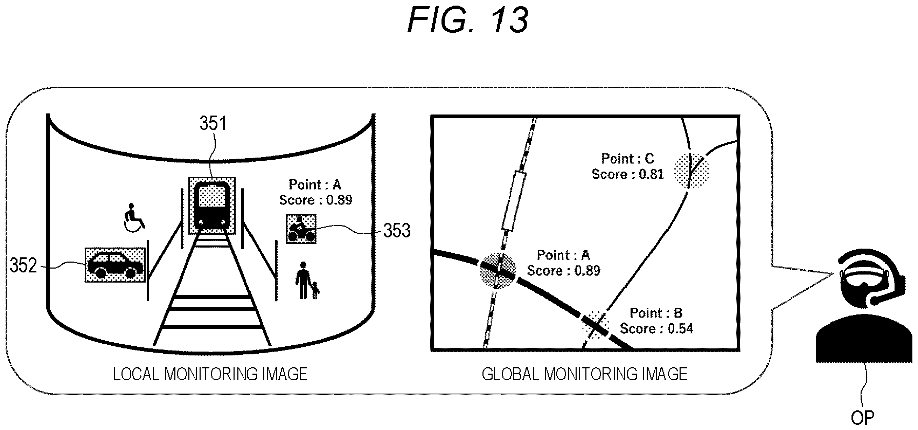

Here, examples of the global monitoring image and the local monitoring image presented to the operator OP will be described with reference to Fig. 13. The right side of Fig. 13 illustrates an example of the global monitoring image, and the left side of Fig. 13 illustrates an example of the local monitoring image.

The global monitoring image is a bird's-eye view image in which the distribution and the risk levels of the points including the caution-needed regions are illustrated in a bird's-eye view on a map. In this example, points A to C are displayed on the map as points including the caution-needed regions. Furthermore, it is indicated that the risk level at the point A is 0.89, the risk level at the point B is 0.54, and the risk level at the point C is 0.81.

Note that, for example, the display mode of the circle indicating the position of each point changes according to the risk level. For example, the higher the risk level, the larger the circle or the darker the color of the circle. In contrast, the lower the risk level, the smaller the circle or the lighter the color of the circle.

As the local monitoring image, for example, a bird's-eye view image obtained by extracting caution-needed regions near a point having the highest risk level and combining the caution-needed regions is used. The local monitoring image is generated, for example, by a method similar to the example of Fig. 10 described above. Here, an example of the monitoring image obtained by extracting caution-needed regions from captured images of the systems 11 present near the point A and combining the extracted caution-needed regions is illustrated.

Furthermore, in this example, the risk level at the point A is indicated in the monitoring image. Furthermore, the caution-needed region having a particularly high risk level is surrounded by a square frame (hereinafter, referred to as a bounding box) and highlighted. In this example, a train 351, a vehicle 352, and a motorcycle 353 are enclosed by bounding boxes.

The display mode of the bounding box changes, for example, on the basis of the risk level of the caution-needed region in the bounding box. For example, the higher the risk level, the thicker the frame of the bounding box or the darker the color of the frame. In contrast, the lower the risk level, the thinner the frame of the bounding box or the lighter the color of the frame. Furthermore, for example, in a case where the inside of the bounding box is translucent, the color inside the bounding box becomes darker as the risk level is higher, and the color inside the bounding box becomes lighter as the risk level is lower.

Note that, for example, the audio output unit 154 may output a sound (for example, a warning sound) corresponding to an object in each caution-needed region under the control of the output control unit 161. In this case, for example, the loudness, pitch, and the like of the output sound may change on the basis of the risk level of each caution-needed region.

Thereafter, the processing returns to step S61, and the processing in step S61 and subsequent steps is executed.

Note that, for example, in a case where the local monitoring image is presented to the operator, processing similar to that in steps S35 to S37 in Fig. 9 may be executed. That is, the operator may designate a caution-needed region in the local monitoring image to intervene in the system 11 that has captured the captured image including the designated caution-needed region.

As described above, the operator can monitor the situation around each system 11 globally and locally.

Note that, for example, both the global monitoring image and the local monitoring image may be simultaneously presented to the operator. Then, the operator may select one of the monitoring images so that the selected monitoring image is enlarged and displayed.

### <Accident Handling Processing>

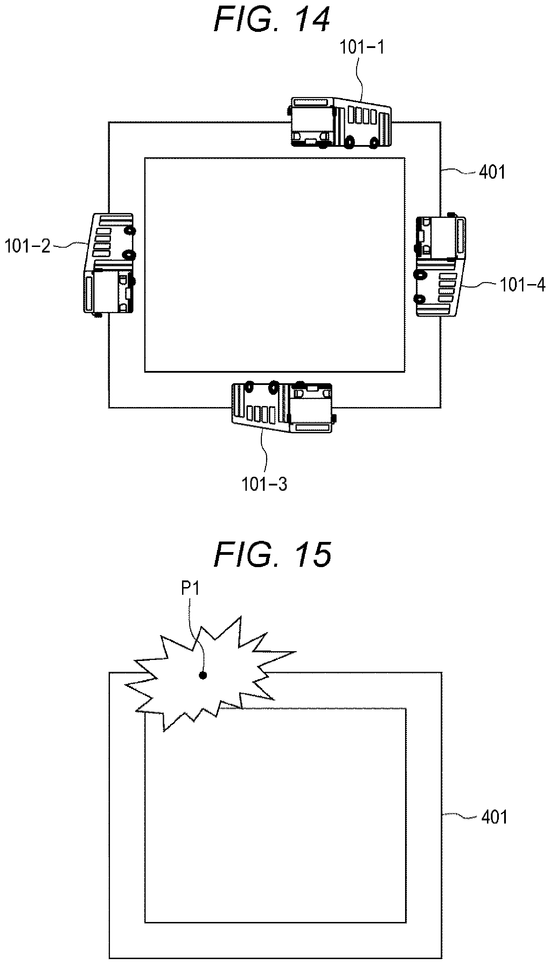

For example, as illustrated in Fig. 14, in a case where vehicles 101-1 to 101-4, which are autonomously traveling buses, go around a predetermined route 401, it is assumed that the operator monitors the surroundings of the vehicles 101-1 to 101-4 by applying the present technology in order to ensure safety.

Note that, hereinafter, in a case where it is not necessary to individually distinguish the vehicles 101-1 to 101-4, they are simply referred to as the vehicles 101.

Fig. 14 illustrates an example in which the four vehicles 101 go around the route 401; however, the number of vehicles 101 is not particularly limited. However, since the visual load on the operator increases, the number of vehicles 101 that can be monitored by one operator is practically limited to about several vehicles.

Furthermore, for example, as illustrated in Fig. 15, in a case where an accident occurs at a point P1 on the route 401, it is assumed that the operator needs to perform operation intervention on the vehicle 101 in order to avoid an accident.

In this case, the operator needs to perform operation intervention on each vehicle 101 every time each vehicle 101 travels in the section where the accident has occurred. Therefore, the load on the operator increases, waiting for the intervention of the operator becomes a bottleneck, and the service of the vehicles 101 may be delayed.

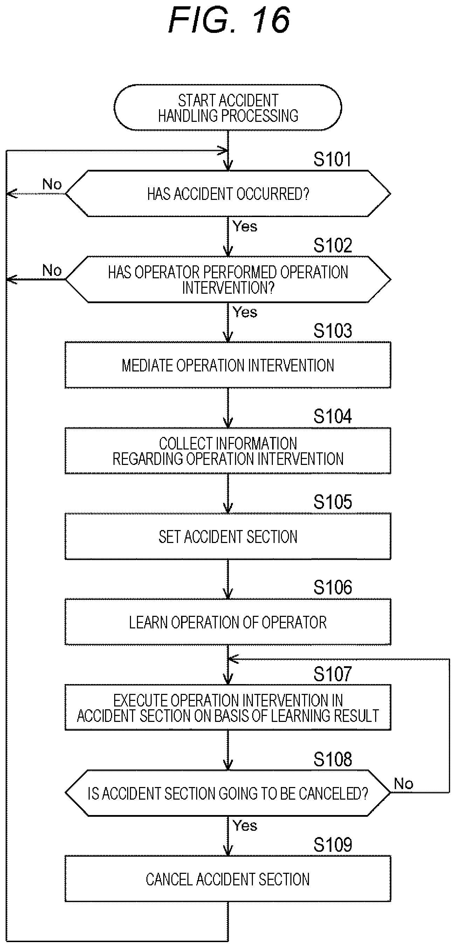

With regard to this, the accident handling processing executed by the management server 13 will be described with reference to the flowchart of Fig. 16.

This processing is started when power of the management server 13 is turned on, and is ended when the power is turned off, for example.

Note that during this processing, for example, monitoring information is transmitted from each vehicle 101 to the management server 13.

In response to this, the image processing unit 212 of the management server 13 generates a monitoring image on the basis of the captured image included in the monitoring information of each vehicle 101. Note that, for example, the image processing unit 212 may use the captured image of each vehicle 101 as it is as the monitoring image, or may generate the monitoring image by the method described above with reference to Fig. 9 or 12. The intermediary unit 214 transmits the monitoring image to the operation terminal 12.

The display unit 153 of the operation terminal 12 displays the monitoring image under the control of the output control unit 161. The operator monitors the surroundings of each vehicle 101 while viewing the monitoring image.

In step S101, the recognition unit 211 determines whether or not an accident has occurred. This processing is repeatedly executed until it is determined that an accident has occurred. In a case where it is determined that an accident has occurred, the processing proceeds to step S102.

Note that an accident may be detected by any of the management server 13, the vehicle 101, and the operator.

For example, the recognition unit 211 of the management server 13 detects an accident on the basis of the monitoring information acquired from the vehicle 101.

For example, in a case where the vehicle 101 detects an accident, monitoring information including the detection result of the accident is transmitted from the vehicle 101 to the management server 13. In response to this, the recognition unit 211 of the management server 13 recognizes the occurrence of the accident on the basis of the monitoring information acquired from the vehicle 101.

For example, in a case where the operator detects an accident, the operator notifies the management server 13 of the occurrence of the accident by using the operation terminal 12. In response to this, the recognition unit 211 of the management server 13 recognizes the occurrence of the accident on the basis of the notification from the operation terminal 12.

In step S102, the intermediary unit 214 determines whether or not the operator has performed operation intervention.

For example, the operator determines whether or not operation intervention is necessary while viewing the monitoring image displayed on the display unit 153 of the operation terminal 12.

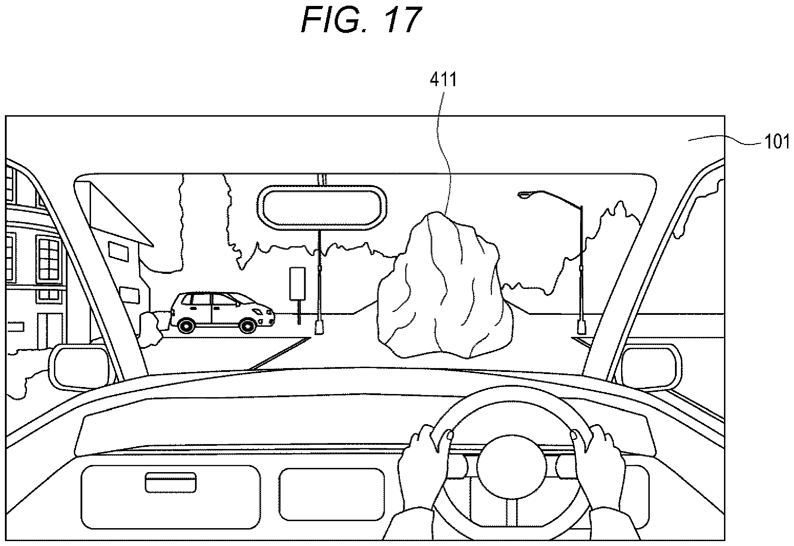

Fig. 17 illustrates an example of the monitoring image displayed to the operator. In this example, there is an obstacle 411 in front of the vehicle 101. For example, the operator determines whether or not operation intervention is necessary for the vehicle 101 in order to avoid the obstacle 411 while viewing the monitoring image.

In a case where the operator determines that operation intervention is necessary, the operator inputs information necessary for the operation intervention to the operation terminal 12.

Note that the input method required for operation intervention is not particularly limited. For example, the operator inputs information necessary for operation intervention to the operation terminal 12 by using the operation input unit 155 or by using a gesture or audio.

In response to this, the intervention unit 163 of the operation terminal 12 generates intervention information on the basis of the information input by the operator. The intervention information includes, for example, a remote operation signal for remotely operating the vehicle 101 and information indicating the line-of-sight direction of the operator. The intervention unit 163 transmits the intervention information to the management server 13.

In response to this, in the case of receiving the intervention information from the operation terminal 12, the intermediary unit 214 of the management server 13 determines that the operator has performed operation intervention, and the processing proceeds to step S104.

In step S103, the management server 13 mediates the operation intervention. Specifically, the intermediary unit 214 transmits the intervention information received from the operation terminal 12 to the vehicle 101 to be subjected to the operation intervention.

In response to this, the vehicle control unit 123 of the vehicle 101 to be subjected to the operation intervention receives the intervention information from the management server 13. The vehicle control unit 123 executes processing according to the operation intervention by controlling the motion of the vehicle 101 on the basis of the received intervention information.

In step S104, the management server 13 collects information regarding operation intervention. Specifically, the learning unit 216 collects the operation history of the operator during the operation intervention on the basis of the remote operation signal included in the intervention information. The operation history includes, for example, operation timings and operation amounts of the steering wheel (steering angle), the accelerator, and brakes of the vehicle 101, and the section in which operation intervention is performed. Moreover, the learning unit 216 collects visual recognition information regarding an object or the like visually recognized by the operator during the operation intervention on the basis of the line-of-sight direction of the operator included in the intervention information and the monitoring image presented to the operator during the operation intervention. Furthermore, the learning unit 216 collects sensor information at the time of operation intervention on the basis of the monitoring information received from the vehicle 101.

In step S105, the accident section setting unit 213 sets an accident section. For example, the accident section setting unit 213 sets, as an accident section, a section in which the operation intervention by the operator has been performed on the basis of the information collected by the learning unit 216 in the processing of step S104.

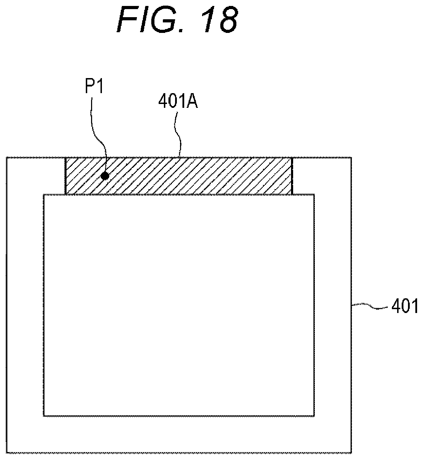

For example, as illustrated in Fig. 18, in the route 401, a section 401A including the point P1 where an accident has occurred is set as the accident section.

In step S106, the learning unit 216 learns the operation of the operator. For example, the learning unit 216 learns the operation of the operator in the accident section by using the operation of the operator in the accident section as an expert and also using visual recognition information or the like of the operator in the accident section. The learning unit 216 obtains parameters of the learning model that mimics the operation by the operator in the accident section, and generates the learning model using the obtained parameters.

Any learning method can be adopted to learn the operation of the operator. For example, it is possible to adopt inverse reinforcement learning combining simulations, inverse reinforcement learning using generative adversarial imitation learning (GAIL), imitation learning using expert operations, and the like. By performing fine-tuning using inverse reinforcement learning, a learning model capable of not only simply imitating the operation of the operator but also avoiding a moving object such as a vehicle or a pedestrian is generated.

In step S107, the intervention unit 215 executes operation intervention in the accident section on the basis of the learning result. Specifically, the intervention unit 215 generates intervention information including a remote operation signal for the vehicle 101 traveling in the accident section by using the learning model, and transmits the intervention information to the vehicle 101.

In response to this, the vehicle control unit 123 of the vehicle 101 receives the intervention information from the management server 13, and executes processing according to the operation intervention by controlling the operation of the vehicle 101 on the basis of the received intervention information.

As a result, the management server 13 executes operation intervention similar to that of the operator on the vehicle 101 traveling in the accident section without intervention of the operator. As a result, each vehicle 101 can avoid an accident while reducing the load on the operator.

In step S108, the management server 13 determines whether or not to cancel the accident section. For example, the recognition unit 211 monitors a change in the situation of the accident section on the basis of the monitoring information transmitted from the vehicle 101. In a case where it is determined that there is a significant change in the situation of the accident section, the recognition unit 211 notifies the operation terminal 12 of the operator of the change in the accident section.

In response to this, the output control unit 161 of the operation terminal 12 receives the notification of the change in the situation of the accident section, and controls the display unit 153 or the audio output unit 154 to notify the operator of the change in the accident section.

In response to this, the operator checks the monitoring image displayed on the display unit 153, and determines whether or not operation intervention is unnecessary in the accident section. The operator inputs the determination result to the operation terminal 12.

Note that a method of inputting the determination result is not particularly limited. For example, the operator inputs the determination result to the operation terminal 12 by using the operation input unit 155 or by using a gesture or audio.

The intervention unit 163 of the operation terminal 12 notifies the management server 13 of the determination result on the necessity of operation intervention in the accident section.

In response to this, in a case where the operator determines that operation intervention is necessary in the accident section, the accident section setting unit 213 of the management server 13 determines not to cancel the accident section, and the processing returns to step S107.

Furthermore, in a case where there is no significant change in the situation of the accident section, the accident section setting unit 213 determines not to cancel the accident section, and the processing returns to step S107.

Thereafter, processing in steps S107 to S108 is repeatedly executed until it is determined in step S108 that the accident section is to be canceled. As a result, until the accident section is canceled, the management server 13 performs operation intervention on the vehicle 101 traveling in the accident section.

In contrast, in a case where the operator determines that operation intervention is unnecessary in the accident section, the accident section setting unit 213 determines to cancel the accident section in step S108, and the processing returns to step S109.

In step S109, the accident section setting unit 213 cancels the accident section. With the cancellation of the accident section, the intervention unit 215 of the management server 13 stops the operation intervention in the vehicle 101.

Thereafter, the processing returns to step S101, and the processing in and after step S101 is executed.

As described above, instead of the operator, the management server 13 performs operation intervention on each vehicle 101, whereby the load on the operator is reduced.

Furthermore, since the operation intervention of the management server 13 is executed using the learning model generated by executing learning processing on the basis of the operation history or the like during the operation intervention of the operator, each vehicle 101 can safely avoid an accident.

Moreover, in a case where a similar accident occurs in the future, the management server 13 performs operation intervention by using the learned learning model in the accident section including the occurrence point of the accident, whereby each vehicle 101 can safely avoid the accident.

### <<2. Second Embodiment>>

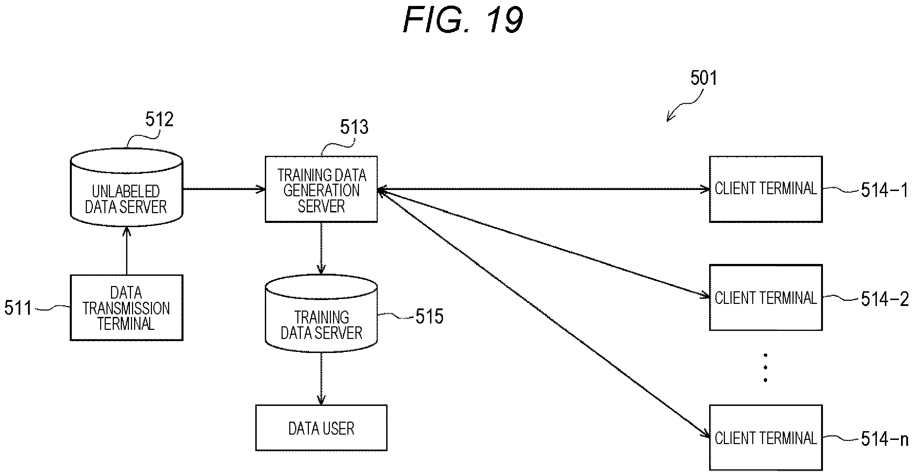

Next, a second embodiment of the present technology will be described with reference to Figs. 19 to 24.

As described above, the recognition unit 211 of the management server 13 executes processing of extracting a caution-needed region from a captured image. In this processing, the recognition unit 211 recognizes, for example, a dangerous object in the captured image, and extracts a region including the dangerous object as the caution-needed region.

In this case, for example, the recognition unit 211 needs to determine whether or not a situation or an object in the captured image is dangerous. For this determination processing, for example, a learning model obtained by machine learning can be used.

Furthermore, the accuracy of the learning model is improved by executing machine learning using more pieces of training data. However, in order to collect a large amount of high-quality training data, it is necessary to give accurate labels to a large amount of data.

In contrast, in the second embodiment of the present technology, an accurate label can be quickly assigned to data for training.

### <Configuration Example of Information Processing System 501>

Fig. 19 illustrates a configuration example of an information processing system 501, which is a second embodiment of the information processing system to which the present technology is applied.

The information processing system 501 includes a data transmission terminal 511, an unlabeled data server 512, a training data generation server 513, client terminals 514-1 to 514-n, and a training data server 515.

Hereinafter, in a case where it is not necessary to individually distinguish the client terminals 514-1 to 514-n, the client terminals are simply referred to as client terminals 514.

The data transmission terminal 511 selects unlabeled data to be labeled, and uploads the selected unlabeled data to the unlabeled data server 512. The unlabeled data is data to which no label is assigned.

The training data generation server 513 acquires unlabeled data from the unlabeled data server 512 and transmits the unlabeled data to each client terminal 514.

Each client terminal 514 presents the unlabeled data to an evaluator. Here, the evaluator is a user who performs an operation of assigning a label.

Each client terminal 514 acquires a label assigned by the evaluator and assigns the label to unlabeled data to generate labeled data. Each client terminal 514 transmits the labeled data to the training data generation server 513.

The training data generation server 513 determines the ground truth label on the basis of the labels assigned by the evaluators. The training data generation server 513 generates training data by assigning the ground truth label to unlabeled data. The training data generation server 513 stores the training data in the training data server 515.

Then, the data user performs machine learning by using the training data stored in the training data server 515.

### <Training Data Generation Processing>

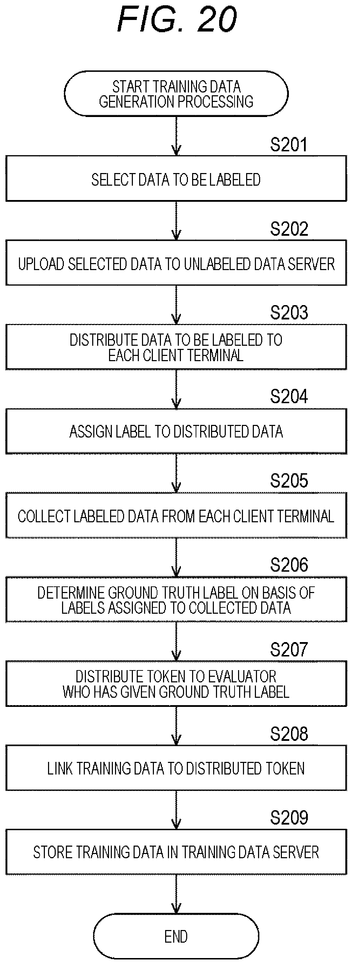

Next, training data generation processing executed by the information processing system 501 will be described in detail with reference to the flowchart of Fig. 20.

In step S201, the data transmission terminal 511 selects data to be labeled. That is, the data transmission terminal 511 selects one of pieces of unlabeled data that have not yet been labeled as data to be labeled.

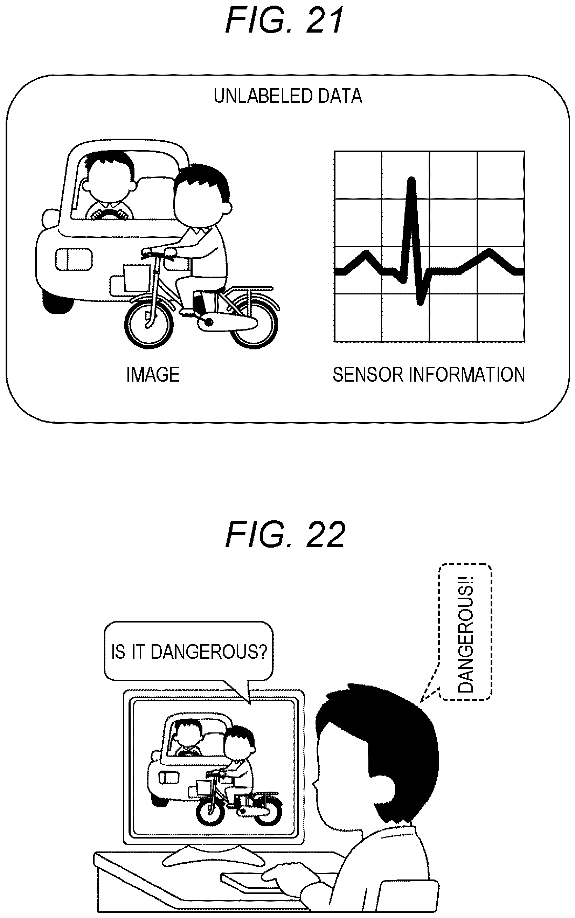

Fig. 21 illustrates an example of unlabeled data. In this example, the unlabeled data includes an image and sensor information. The image may be either a moving image or a still image. The sensor information is, for example, information detected by a predetermined sensor under the situation indicated in the image. For example, the sensor information includes information indicating the speed of the vehicle in the image.

In step S202, the data transmission terminal 511 uploads the selected data to the unlabeled data server 512.

In step S203, the training data generation server 513 distributes data to be labeled to each client terminal 514. Specifically, the training data generation server 513 acquires the data uploaded from the data transmission terminal 511 from the unlabeled data server 512 and transmits the data to each client terminal 514.

In step S204, each client terminal 514 assigns a label to the distributed data.

For example, as illustrated in Fig. 22, the client terminal 514 presents a situation indicated by the image and the sensor information included in the acquired unlabeled data to the evaluator. Furthermore, the client terminal 514 displays a message "Is it dangerous?" or outputs audio to inquire of the evaluator whether or not the presented situation is dangerous.

In response to this, the evaluator determines whether or not the presented situation is dangerous, and inputs a label indicating the determination result to the client terminal 514. For example, the evaluator inputs a label with a value of either "dangerous" or "OK".

The client terminal 514 generates labeled data by assigning the label input by the evaluator to the distributed data.

In step S205, the training data generation server 513 collects the labeled data from each client terminal 514.

In step S206, the training data generation server 513 determines the ground truth label on the basis of the labels assigned to the collected data. For example, the training data generation server 513 determines the ground truth label by majority decision from among the labels assigned to the collected labeled data. That is, the training data generation server 513 determines the most common label among the labels assigned to the collected labeled data to be the ground truth label.

The training data generation server 513 generates training data by assigning the ground truth label to data to be labeled.

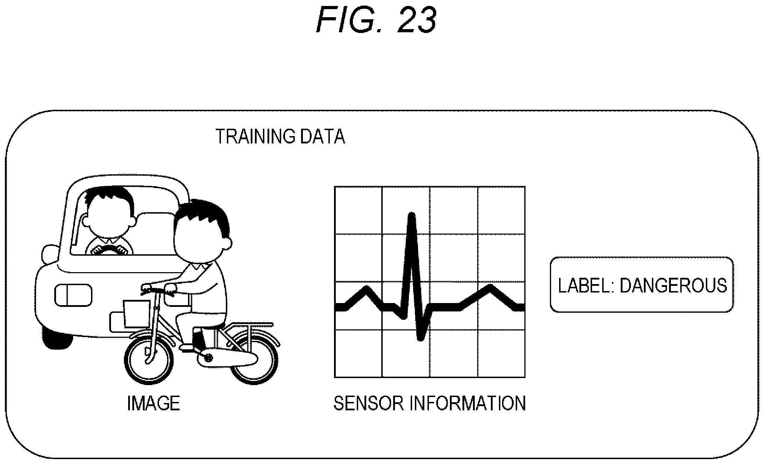

For example, as illustrated in Fig. 23, training data is generated by assigning a ground truth label whose value is "dangerous" to the unlabeled data in Fig. 21.

In step S207, the training data generation server 513 distributes a token to the evaluator who has given the ground truth label. The token is, for example, data that can be exchanged for reward. Note that the type of reward that can be exchanged with the token is not particularly limited.

Specifically, the training data generation server 513 sends the token to the client terminal 514 that is the transmission source of the labeled data to which the ground truth label is assigned. As a result, the token is distributed to the evaluator who has given the ground truth label.

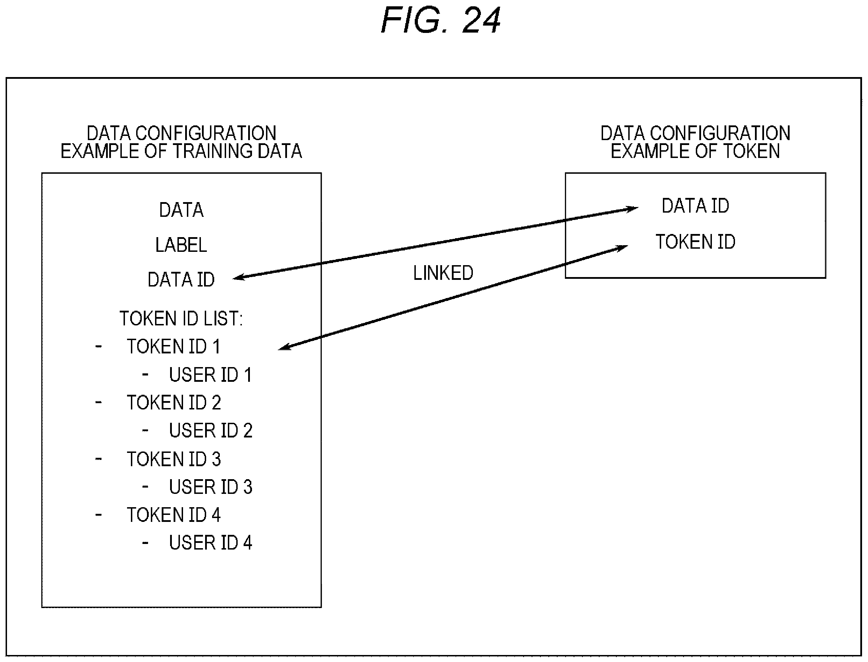

The right side of Fig. 24 illustrates a data configuration example of the token. The token includes a data ID and a token ID.

The data ID is an ID for identifying data to which a ground truth label is assigned.

The token ID is an ID for identifying the distributed token.

In step S208, the training data generation server 513 links the training data to the distributed token. For example, the training data generation server 513 links the training data to the distributed token by adding information regarding the distributed token to the training data.

The left side of Fig. 24 illustrates a data configuration example of the training data to which the information regarding the distributed token has been linked. The training data includes data, a label, a data ID, and a token ID list.

The data ID corresponds to the data ID included in the distributed token.

The token ID list includes a set of a token ID and a user ID for each evaluator to which a token is distributed. The token ID corresponds to the token ID included in the distributed token. The user ID is an ID for identifying the evaluator whom the token is distributed.

As a result, it is possible to grasp the evaluator whom the token is distributed in return for assigning the ground truth label for each training data.

In step S209, the training data generation server 513 stores the training data in the training data server 515.

By repeating the above processing, it is possible to quickly collect a large amount of training data to which appropriate labels are assigned.

That is, the ground truth label is determined by majority decision from among the labels assigned by a plurality of evaluators. Furthermore, since a token is distributed to the evaluator who has assigned the ground truth label, each evaluator is motivated to assign an appropriate label. This improves the accuracy of the label. Furthermore, assignment of an inappropriate label is suppressed.

Furthermore, since an unspecified number of evaluators can participate in labeling, labels for each piece of data can be quickly collected.

Moreover, since the ground truth label is determined by majority decision, and the task of confirming the content of the ground truth label is omitted, it is possible to promptly assign the ground truth label to each piece of data at a lower cost.

Note that, for example, it is possible to calculate the probability (hereinafter, referred to as an accuracy rate) of assigning a ground truth label for each evaluator on the basis of the token ID list of each piece of training data. As a result, it is possible to determine the superiority and inferiority of each evaluator, and for example, the reward can be changed on the basis of the superiority and inferiority of the evaluator. For example, the higher the accuracy rate of the evaluator, the higher the reward to be given to the evaluator.

Furthermore, for example, a reward such as money may be directly given to the evaluator who has assigned the ground truth label, instead of the token.

Moreover, for example, a plurality of pieces of data may be collectively distributed to the evaluator, so that the evaluator collectively assigns a label to each piece of data.

Furthermore, the data user may individually use the training data accumulated in the training data server 515, or may use a training data group in which a plurality of pieces of training data is collected. Note that the training data group is classified according to, for example, the type of data, the purpose of use, and the like.

Furthermore, the data user may give a consideration to a data manager who manages training data for each training data or may give a consideration to a training data group. In any case, since the evaluator who has assigned the ground truth label to each piece of training data is grasped from the token ID list, it is possible to return a part of the consideration given from the data user to the evaluator who has assigned the ground truth label.

Moreover, for example, the data manager may request a group such as a company or an organization instead of an individual to perform labeling. In this case, for example, a group is evaluated on the basis of the average or the like of the accuracy rates of the evaluators in the group, and a reward is given.

### <<3. Modifications>>

Hereinafter, modifications of the above-described embodiments of the present technology will be described.

### <Modification regarding Sharing of Processing>

In the information processing system 1, sharing of each processing can be changed as appropriate.

For example, the operation terminal 12 or the management server 13 may execute all or part of recognition processing of the surrounding situation of the system 11 and the states of the system 11 and the user.

For example, the operation terminal 12 may execute processing of the management server 13, and the operation terminal 12 may directly intervene in each system 11. In this case, for example, the processing of generating the monitoring image described above with reference to Figs. 9 and 12 is executed by the operation terminal 12.

For example, the management server 13 may execute the training data generation processing described above with reference to Fig. 19 and the like. Furthermore, the management server 13 may execute learning processing using training data generated by the training data generation processing.

### <Other Modifications>

The system 11 of the information processing system 1 of Fig. 1 can be installed for monitoring at an arbitrary place such as a road. In this case, for example, the situation around the system 11 is monitored on the basis of the monitoring information obtained by the system 11. Note that, since the system 11 is not particularly used or moved by the user, intervention by the operator is basically unnecessary.

The training data generation processing described above with reference to Fig. 19 and the like can be applied to the overall processing of assigning a label to training data regardless of the learning method, the purpose of learning, the type of training data, and the like.

### <<4. Others>>

### <Configuration Example of Computer>

The above-described series of processing can be performed by hardware or software. In a case where the series of processing is performed by software, a program constituting the software is installed in a computer. Here, examples of the computer include a computer incorporated in dedicated hardware, and a general-purpose personal computer capable of executing various functions by installing various programs, for example.

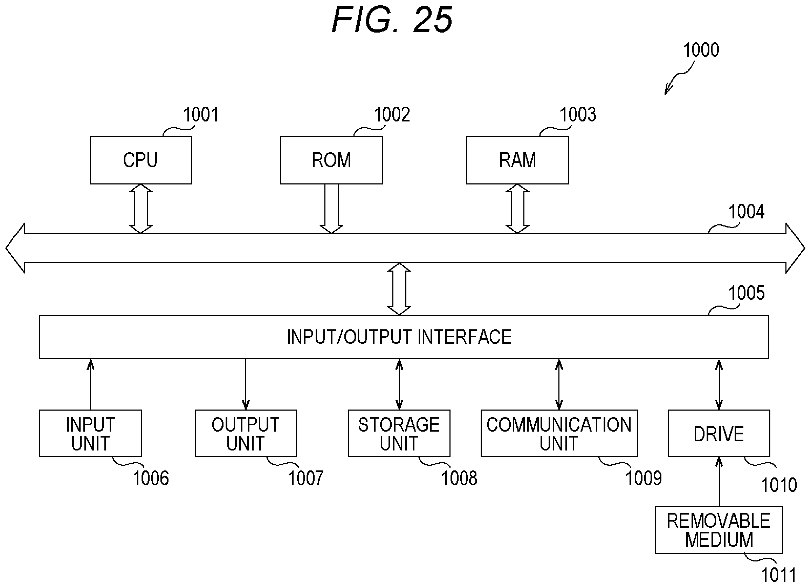

Fig. 25 is a block diagram illustrating a configuration example of the hardware of the computer that executes the above-described series of processing by a program.

In a computer 1000, a central processing unit (CPU) 1001, a read only memory (ROM) 1002, and a random access memory (RAM) 1003 are mutually connected by a bus 1004.

An input/output interface 1005 is further connected to the bus 1004. An input unit 1006, an output unit 1007, a storage unit 1008, a communication unit 1009, and a drive 1010 are connected to the input/output interface 1005.

The input unit 1006 includes an input switch, a button, a microphone, an imaging element, and the like. The output unit 1007 includes a display, a speaker, and the like. The storage unit 1008 includes a hard disk, a non-volatile memory, and the like. The communication unit 1009 includes a network interface and the like. The drive 1010 drives a removable medium 1011 such as a magnetic disk, an optical disc, a magneto-optical disk, or a semiconductor memory.

In the computer 1000 configured as described above, the series of processing described above is performed, for example, by the CPU 1001 loading a program recorded in the storage unit 1008 into the RAM 1003 via the input/output interface 1005 and the bus 1004, and executing the program.

The program executed by the computer 1000 (CPU 1001) can be provided by being recorded in the removable medium 1011 as a package medium or the like, for example. Furthermore, the program can be provided via a wired or wireless transmission medium, such as a local area network, the Internet, or digital satellite broadcasting.

In the computer 1000, by attaching the removable medium 1011 to the drive 1010, the program can be installed in the storage unit 1008 via the input/output interface 1005. Furthermore, the program can be received by the communication unit 1009 via a wired or wireless transmission medium, and installed in the storage unit 1008. In addition, the program can be installed in the ROM 1002 or the storage unit 1008 in advance.

Note that the program executed by the computer may be a program that executes processing in time series in the order described in the present description, or a program that executes processing in parallel or at a necessary timing such as when a call is made.

Furthermore, in the present description, a system is intended to mean assembly of a plurality of components (devices, modules (parts), and the like) and it does not matter whether or not all the components are in the same casing. Therefore, a plurality of devices accommodated in separate casings and connected via a network and one device in which a plurality of modules is accommodated in one casing are both systems.

Moreover, the embodiments of the present technology are not limited to the above-described embodiments, and various modifications can be made without departing from the gist of the present technology.

For example, the present technology may be configured as cloud computing in which a function is shared by a plurality of devices via a network to process together.

Furthermore, each step described in the above-described flowcharts can be executed by one device, or can be executed in a shared manner by a plurality of devices.

Moreover, in a case where a plurality of processes is included in one step, the plurality of processes included in the one step can be executed in a shared manner by a plurality of devices in addition to being executed by one device.

### <Example of Combinations of Configurations>

The present technology may also have the following configurations.

(1) An information processing device including:
   a recognition unit that extracts a caution-needed region, which is a region requiring caution around each of a plurality of systems, on the basis of a plurality of captured images captured at different positions by the plurality of systems; and
   an image processing unit that generates a first bird's-eye view image on the basis of the plurality of captured images including a plurality of the caution-needed regions.
(2) The information processing device according to (1), in which
   the image processing unit generates the first bird's-eye view image by combining a plurality of caution-needed region images indicating a plurality of the caution-needed regions, respectively.
(3) The information processing device according to (2), in which
   the image processing unit arranges each of the plurality of caution-needed region images at a position in the first bird's-eye view image, the position corresponding to a position in a corresponding one of the plurality of captured images, which are original captured images.
(4) The information processing device according to (3), further including:
   an intermediary unit that mediates intervention by an operator in one of the plurality of systems that has captured one of the plurality of captured images including one of the plurality of caution-needed regions designated by the operator among the plurality of caution-needed regions in the first bird's-eye view image.
(5) The information processing device according to (4), in which
   at least one of visual intervention, auditory intervention, physical intervention, or operational intervention is used as intervention by the operator.
(6) The information processing device according to any one of (2) to (5), in which
   each of the plurality of caution-needed region images is an image extracted from a corresponding one of the plurality of captured images.
(7) The information processing device according to any one of (2) to (5), in which
   each of the plurality of caution-needed region images is a two-dimensional model or a three-dimensional model of an object existing in a corresponding one of the plurality of caution-needed regions.
(8) The information processing device according to any one of (2) to (7), in which
   the recognition unit estimates a risk level of each of the plurality of caution-needed regions, and
   the image processing unit changes a display mode of each of the plurality of caution-needed region images on the basis of the risk level of a corresponding one of the plurality of caution-needed regions.
(9) The information processing device according to any one of (2) to (8), in which
   the image processing unit generates a second bird's-eye view image which illustrates a distribution of points including the plurality of caution-needed regions on a map.
(10) The information processing device according to (9), in which
   the recognition unit estimates a risk level of each of the points, and
   selects one of the first bird's-eye view image and the second bird's-eye view image on the basis of the risk level of the each of the points, and transmits the one of the first bird's-eye view image and the second bird's-eye view image to an operation terminal used by an operator.
(11) The information processing device according to (10), in which
   the image processing unit generates the first bird's-eye view image by combining the plurality of caution-needed region images indicating the plurality of caution-needed regions included in the points where the risk level is equal to or higher than a predetermined threshold.
(12) The information processing device according to (1), in which
   the image processing unit generates the first bird's-eye view image which illustrates a distribution of a point including the caution-needed region on a map.
(13) The information processing device according to any one of (1) to (12), in which
   the caution-needed region includes at least one of a dangerous object or an object that needs to be checked by one of the plurality of systems or a user who uses the one of the plurality of systems.
(14) The information processing device according to any one of (1) to (13), further including:
   an accident section setting unit that sets a first accident section including an occurrence point of a first accident on the basis of a section in which an operator has performed operation intervention on a vehicle that is one of the plurality of systems in order to avoid the first accident;
   a learning unit that generates a learning model by learning an operation of the operator on the vehicle in the first accident section; and
   an intervention unit that uses the learning model to perform operation intervention on another vehicle in the first accident section.
(15) The information processing device according to (14), in which
   the accident section setting unit cancels the first accident section in a case where the operator determines that operation intervention in the first accident section is unnecessary, and
   the intervention unit stops the operation intervention on the another vehicle in a case where the first accident section is canceled.
(16) The information processing device according to (14) or (15), in which
   in a case where a second accident similar to the first accident occurs, the intervention unit uses the learning model to perform operation intervention on a vehicle in a second accident section including an occurrence point of the second accident.
(17) The information processing device according to any one of (1) to (16), further including:
   a training data generation unit that generates training data by assigning a ground truth label to data used for training a learning model used by the recognition unit, the ground truth label having been determined on the basis of labels assigned to the data by a plurality of evaluators.
(18) The information processing device according to (17), in which
   the training data generation unit gives a reward to one of the plurality of evaluators who has assigned the ground truth label among the plurality of evaluators.
(19) An information processing method including:
   by an information processing device,
   extracting a caution-needed region, which is a region requiring caution around each of a plurality of systems, on the basis of a plurality of captured images captured at different positions by the plurality of systems; and
   generating a bird's-eye view image on the basis of the plurality of captured images including a plurality of the caution-needed regions.
(20) A program causing a computer to execute processing of:
   extracting a caution-needed region, which is a region requiring caution around each of a plurality of systems, on the basis of a plurality of captured images captured at different positions by the plurality of systems; and
   generating a bird's-eye view image on the basis of the plurality of captured images including a plurality of the caution-needed regions.

Note that the effects described herein are merely examples and are not limited, and other effects may be provided.

### REFERENCE SIGNS LIST

- 1: Information processing system
- 11-1 to 11-m: System
- 12-1 to 12-m 13: Management server
- 51: User support system
- 61: External sensor
- 62: Internal sensor
- 65: Control unit
- 66: Output unit
- 101: Vehicle
- 111: External sensor
- 113: Internal sensor
- 115: Recognition unit
- 116: Monitoring information transmission unit
- 120: Accident detection unit
- 121: Situation determination unit
- 122: Route generation unit
- 123: Vehicle control unit
- 152: Control unit
- 153: Display unit
- 154: Audio output unit
- 155: Operation input unit
- 156: Imaging unit
- 157: Audio input unit
- 161: Output control unit
- 162: Action recognition unit
- 163: Intervention unit
- 202: Control unit
- 211: Recognition unit
- 212: Image processing unit
- 213: Accident section setting unit
- 214: Intermediary unit
- 215: Intervention unit
- 216: Learning unit
- 501: Information processing system
- 513: Training data generation server
- 514-1 to 514-n: Client terminal
- 515: Training data server

## Claims

1. An information processing device comprising:
a recognition unit that extracts a caution-needed region, which is a region requiring caution around each of a plurality of systems, on a basis of a plurality of captured images captured at different positions by the plurality of systems; and
an image processing unit that generates a first bird's-eye view image on a basis of the plurality of captured images including a plurality of the caution-needed regions.

2. The information processing device according to claim 1, wherein
the image processing unit generates the first bird's-eye view image by combining a plurality of caution-needed region images indicating a plurality of the caution-needed regions, respectively.

3. The information processing device according to claim 2, wherein
the image processing unit arranges each of the plurality of caution-needed region images at a position in the first bird's-eye view image, the position corresponding to a position in a corresponding one of the plurality of captured images, which are original captured images.

4. The information processing device according to claim 3, further comprising:
an intermediary unit that mediates intervention by an operator in one of the plurality of systems that has captured one of the plurality of captured images including one of the plurality of caution-needed regions designated by the operator among the plurality of caution-needed regions in the first bird's-eye view image.

5. The information processing device according to claim 4, wherein
at least one of visual intervention, auditory intervention, physical intervention, or operational intervention is used as intervention by the operator.

6. The information processing device according to claim 2, wherein
each of the plurality of caution-needed region images is an image extracted from a corresponding one of the plurality of captured images.

7. The information processing device according to claim 2, wherein
each of the plurality of caution-needed region images is a two-dimensional model or a three-dimensional model of an object existing in a corresponding one of the plurality of caution-needed regions.

8. The information processing device according to claim 2, wherein
the recognition unit estimates a risk level of each of the plurality of caution-needed regions, and
the image processing unit changes a display mode of each of the plurality of caution-needed region images on a basis of the risk level of a corresponding one of the plurality of caution-needed regions.

9. The information processing device according to claim 2, wherein
the image processing unit generates a second bird's-eye view image which illustrates a distribution of points including the plurality of caution-needed regions on a map.

10. The information processing device according to claim 9, wherein
the recognition unit estimates a risk level of each of the points, and
selects one of the first bird's-eye view image and the second bird's-eye view image on a basis of the risk level of the each of the points, and transmits the one of the first bird's-eye view image and the second bird's-eye view image to an operation terminal used by an operator.

11. The information processing device according to claim 10, wherein
the image processing unit generates the first bird's-eye view image by combining the plurality of caution-needed region images indicating the plurality of caution-needed regions included in the points where the risk level is equal to or higher than a predetermined threshold.

12. The information processing device according to claim 1, wherein
the image processing unit generates the first bird's-eye view image which illustrates a distribution of a point including the caution-needed region on a map.

13. The information processing device according to claim 1, wherein
the caution-needed region includes at least one of a dangerous object or an object that needs to be checked by one of the plurality of systems or a user who uses the one of the plurality of systems.

14. The information processing device according to claim 1, further comprising:
an accident section setting unit that sets a first accident section including an occurrence point of a first accident on a basis of a section in which an operator has performed operation intervention on a vehicle that is one of the plurality of systems in order to avoid the first accident;
a learning unit that generates a learning model by learning an operation of the operator on the vehicle in the first accident section; and
an intervention unit that uses the learning model to perform operation intervention on another vehicle in the first accident section.

15. The information processing device according to claim 14, wherein
the accident section setting unit cancels the first accident section in a case where the operator determines that operation intervention in the first accident section is unnecessary, and
the intervention unit stops the operation intervention on the another vehicle in a case where the first accident section is canceled.

16. The information processing device according to claim 14, wherein
in a case where a second accident similar to the first accident occurs, the intervention unit uses the learning model to perform operation intervention on a vehicle in a second accident section including an occurrence point of the second accident.

17. The information processing device according to claim 1, further comprising:
a training data generation unit that generates training data by assigning a ground truth label to data used for training a learning model used by the recognition unit, the ground truth label having been determined on a basis of labels assigned to the data by a plurality of evaluators.

18. The information processing device according to claim 17, wherein
the training data generation unit gives a reward to one of the plurality of evaluators who has assigned the ground truth label among the plurality of evaluators.

19. An information processing method comprising:
by an information processing device,
extracting a caution-needed region, which is a region requiring caution around each of a plurality of systems, on a basis of a plurality of captured images captured at different positions by the plurality of systems; and
generating a bird's-eye view image on a basis of the plurality of captured images including a plurality of the caution-needed regions.

20. A program causing a computer to execute processing of:
extracting a caution-needed region, which is a region requiring caution around each of a plurality of systems, on a basis of a plurality of captured images captured at different positions by the plurality of systems; and
generating a bird's-eye view image on a basis of the plurality of captured images including a plurality of the caution-needed regions.
